# EUROPEAN PATENT SPECIFICATION

(11) **EP 0 679 335 B1**
(45) Date of publication and mention of the grant of the patent: **24.02.1999**
(21) Application number: 95106138.1
(22) Date of filing: 24.04.1995
(51) Int. Cl.: A22B 5/00, A22B 5/08, B08B 3/02, B05B 15/04, A22B 5/10

(54) **Carcass cleaning system**
Schlachttierreinigungsanlage
Système de nettoyage de carcasses

(30) Priority: 28.04.1994 US 234684; 25.01.1995 US 378534; 03.04.1995 US 416036
(43) Date of publication of application: 02.11.1995
(73) Proprietor: KENTMASTER MFG. CO., INC., Monrovia, California 91016 (US)
(72) Inventor: Karubian, Ralph K., Monrovia, California 91016 (US); Leamen, John A., Monrovia, California 91016 (US)
(74) Representative: Baillie, Iain Cameron

(56) References cited:
- AU-B- 4 967 664
- DE-C- 4 119 812
- DE-U- 9 113 987
- DE-U- 9 311 886
- DATABASE WPI Week 8342 30 November 1983 Derwent Publications Ltd., London, GB; AN 83-793914 & SU-A-982 634 (ODESSA REFRIG IND RES) , 28 December 1982

## Description

### FIELD OF THE INVENTION

This invention is directed to a carcass cleaning system where the manually operable head applies a cleaning liquid and simultaneously vacuums off the liquid and contaminant, or the manually operable head applies steam and simultaneously vacuums off the steam and contaminant, or a manually positionable wand simultaneously applies a hot water spray within the wand and vacuums away the spray, together with a steam nozzle exterior to the wand for delivering steam to the carcass surface adjacent the wand.

### BACKGROUND OF THE INVENTION

Animals are killed to produce commercial meat, such as beef, lamb and pork, and are hung on a conveyor so as to move along a processing line. On the conveyor, the killed hanging animal is gutted and skinned as early processing steps. The resulting carcass moves forward along the processing line, but may carry contamination on the surface of the carcass from earlier processing steps such as the process of hide removal where hair and mud can fall off onto the carcass.

The present practice, which is mandated by the U.S. Department of Agriculture, is to cut off the surface material upon which the contamination lies. This requires individual handwork and results in loss of otherwise useful meat and/or fat material from the carcass.

The U.S. Department of Agriculture does not approve of washing down the contamination off of the carcass because this process spreads the contamination and/or bacteria in it. High-pressure spray would deteriorate the meat and spread the contamination. Vacuum alone is not satisfactory because it leaves some of the contamination and/or bacteria behind.

Australian patent number 49,676/64 to Gallaway is one example of an apparatus for cleaning meat carcasses. The Gallaway device utilizes high-pressure spray jets to spray water on a contaminated part of a carcass and a suction device to remove the contaminated water from the carcass surface for disposal.

### SUMMARY OF THE INVENTION

In order to understand this invention, it is stated in essentially summary form that it is directed to a carcass cleaning system which has a manually positionable head or wand, and the head or wand simultaneously sprays a cleaning liquid onto the carcass surface and vacuums away the liquid and contamination. In another embodiment, a manually positionable wand delivers a bath of steam onto the carcass surface and vacuums away the steam, its condensation products and contamination.

It is thus an aspect of this invention to provide a carcass cleaning system which removes the contamination from the surface of a carcass without spreading the contamination.

It is another aspect of this invention to provide a carcass cleaning system which is easily operable and which can be conveniently employed on a meat processing line to be selectively applied to the surface of the carcass to remove contamination therefrom.

It is a further aspect of this invention to provide a carcass cleaning system which effectively removes contamination from the surface of the carcass without loss of carcass material.

It is another purpose and advantage of this invention to provide a carcass cleaning system which is easily operable and which can be conveniently employed on a meat processing line to be selectively applied to the surface of the carcass to remove contamination therefrom.

It is a further aspect of this invention to provide a carcass cleaning system which effectively removes contamination from the surface of the carcass without loss of carcass material.

It is a further aspect of this invention to provide a wand having a vacuum nozzle within a steam nozzle and supplied with a water nozzle within the vacuum nozzle so that the water nozzle sterilizes the inside of the vacuum nozzle and can deliver a spray of water onto difficult to remove contamination.

It is another aspect of this invention to provide a carcass cleaning system wherein the surface of the carcass in a limited area is bathed with hot water delivered from a manually positionable wand, and the carcass immediately outside the wand is bathed in steam so the wand draws away the steam condensation products, spray water and the contamination.

This invention may provide a manually controllable wand which contains a water spray and carries thereon at least one steam nozzle so that, when the wand is applied to an area of contamination on the surface of a carcass, the hot water loosens the contamination and sterilizes the adjacent surface while the vacuum nozzle draws away the water and contamination. In addition, steam is sprayed onto the carcass surface directly adjacent the wand; the steam and its condensation products are also vacuumed away by the wand.

The invention may also provide a self-cleaning wand so that, as it loosens contamination on a carcass surface and sterilizes the carcass surface, the wand automatically applies sterilizing hot water to the inside surfaces and sterilizing steam to the outside surfaces of the wand itself to reduce cross-contamination from one carcass to the next.

### BRIEF DESCRIPTION OF THE DRAWINGS

FIGURE 1 is a perspective view of a meat processing line at the carcass cleaning section showing the carcass cleaning system of this invention as useful therein.
FIGURE 2 is a perspective view of one preferred embodiment of the cleaning head of the system.
FIGURE 3 is a side view showing the application of the cleaning head of FIGURE 2 to the carcass.
FIGURE 4 is an enlarged view similar to FIGURE 3 shown as a longitudinal section through the cleaning head.
FIGURE 5 is an enlarged section taken generally along line 5-5 of FIGURE 2, with parts broken away.
FIGURE 6 is a further enlarged view showing the application of the cleaning head of FIGURE 2 to the carcass surface and the removal of contamination from the carcass surface.
FIGURE 7 is a side view, partly fragmentary, broken away and sectioned, of another preferred embodiment of the cleaning head of the system.
FIGURE 8 is a top view, partly broken away, taken in the direction of the arrows along line 8-8 in FIGURE 7.
FIGURE 9 is a perspective view of a meat processing line at the carcass cleaning section showing the carcass cleaning system of this invention as useful therein.
FIGURE 10 is a block diagram of the system, showing some of the functions of the system.
FIGURE 11 is a side-elevational view of the wand which is used for cleaning the surface of the carcass, with parts broken away and parts taken in section.
FIGURE 12 is a top view of the wand.
FIGURE 13 is a face view of the wand.
FIGURE 14 is a perspective view of the manually controlled wand in another embodiment of the invention.
FIGURE 15 is side-elevationaL view of the wand in FIGURE 14, with parts broken away and parts taken in section.
FIGURE 16 is an enlarged section taken generally along line 3-3 of FIGURE 15.
FIGURE 17 is a further enlarged section taken generally along line 4-4 of FIGURE 16.

### DESCRIPTION OF THE PREFERRED EMBODIMENT

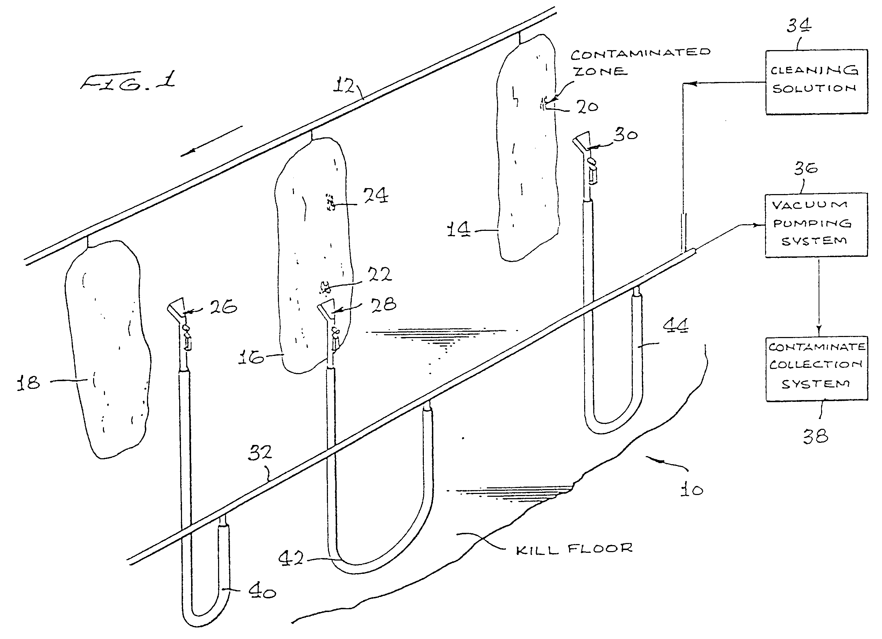

The carcass cleaning system of this invention is generally indicated at 10 in FIGURE 1. FIGURE 1 illustrates a portion of the process line in a commercial meat processing facility. Conveyor 12 has a plurality of trolleys which are moved therealong under power at a desired rate. The three trolleys shown respectively carry carcasses 14, 16 and 18 as they move to the left from earlier process steps and move to later process steps. The portion of the conveyor shown passes through the zone where the skinned carcass is to have contaminants thereon removed. In the past, the contaminants, for example, hair, mud and dirt with their usual bacteria, were removed by cutting away the surface material which carries the contaminants. In accordance with this invention, the system 10 removes the contamination and disinfects the surface of the contaminated carcass. A contaminated zone 20 is shown on carcass 14. Contaminated zones 22 and 24 are shown on carcass 16. A contaminated zone has already been removed from the carcass 18. The carcass cleaning system comprises a plurality of carcass cleaning heads. A sufficient number is provided at this station along the conveyor to be able to easily remove the contamination at the conveyor speed. Heads 26, 28 and 30 are shown in FIGURE 1, although more or fewer heads can be provided. Line 32 carries a cleaning solution under pressure from a cleaning solution supply 34. The cleaning solution supply comprises a tank of cleaning solution and a pump which delivers the solution at the desired pressure.

As will be described below, the carcass cleaning solution is a water-base carcass cleaning solution. The line 32 is a double line which is also connected to a vacuum pumping system 36 which withdraws material in air, as is described below. The material collected goes into collection system 38 for later disposal. Each of the heads is connected to the line 32 by means of hoses 40, 42 and 44, respectively. These hoses both supply the cleaning solution and withdraw material by vacuum. Preferably, the two hoses lie together in their connection to the head. The head 30 is shown in its rest position before the operator takes it to the contamination zone 20. This rest position may be on a suspension counterbalance or may be on a convenient hook. The head 28 is shown in a position where it is acting upon the contamination zone 22. An operator is manually positioning and moving the head 28 in the manner described below. The head 26 has already removed the contaminated zone from the carcass 18, and the head 26 has been returned to its rest position.

The head 28 is best seen in FIGURES 2 and 4. It comprises a body 46 to which is attached a handle 48 and a hose connector 50. The hose connector 50 is hollow and has a vacuum passage 52 which extends from the hose connector to the body. The body contains a valve bore 54, see FIGURE 4, which contains a trumpet valve 56. The trumpet valve 56 is urged to the right by means of compression spring 58. The opposite end of the trumpet valve 56 carries thumb flange 60, which is the manual valve actuator. The thumb flange 60 is ergonomically positioned with respect to handle 48 so that, when the handle is held in the fingers, the thumb overlies the thumb flange valve actuator 60 comfortably.

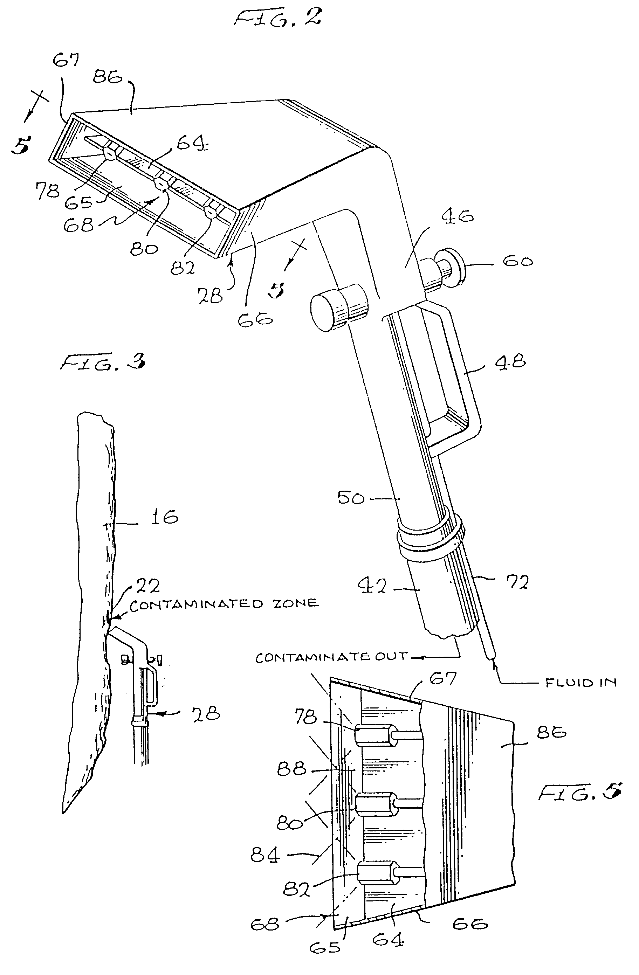

Forward of the valve, body 46 carries vacuum nozzle 62. The nozzle 62 is defined by top and bottom walls 64 and 65 and left and right side walls 66 and 67, see FIGURE 5. The result is to define a horizontally wide, but vertically narrow vacuum mouth 68. The walls defining the mouth define an opening back to the valve body. The valve 56 has a vacuum opening 70 therethrough. The opening 70 is positioned so that, when the valve 56 is depressed to the actuated position shown in FIGURE 4, the mouth 68 is connected to the vacuum in vacuum passage 52. Thus, when the operator moves the vacuum mouth 68 against a contaminated zone 22 and presses the valve 56, vacuum is applied to the vacuum mouth 68.

The pressurized supply of cleaning solution is delivered to the head 28 through cleaning solution line 72. The line 72 is conveniently strapped to the side of the vacuum hose 42, as seen in FIGURES 2 and 4, or may lie inside the vacuum hose. The cleaning solution line 72 extends up to the body 46 and is connected to the side of the valve body, as seen in FIGURE 4. The trumpet valve 56 has a cleaning solution opening 74 therein which opens the line 72 to the cleaning solution nozzle line 76 when the valve 56 is in the actuated, depressed position shown in FIGURE 4. The cleaning solution nozzle line 76 extends forward above the vacuum mouth 68 and terminates in one or more suitable nozzles. The purpose of these nozzles is to spray cleaning and disinfecting solution to the surface of the carcass and particularly the contaminated zone 22 at the same time the vacuum is applied. Preferably, the nozzles have an overlapping spray which does not quite reach the side walls 66 and 67, as shown in FIGURE 5. Three nozzles 78, 80 and 82 are shown.

The cleaning solution is principally water and preferably has an antiseptic therein, such as vinegar or other mild acids of types known to kill bacteria, such as acetic, citric and lactic acids, none of which are toxic to humans in dilute solutions. The water preferably is heated so that, as it leaves the nozzle and impinges upon the meat, it has a temperature greater than 72°C. (161° F.), such as 82°C. (180° F.) more or less. It is known that 72°C. (161° F). is a critical temperature for the usual bacteria encountered in carcass processing. With this temperature range, the meat is not discolored by excess temperature. The pressure is low so that the cleaning solution impinges only on the surface of the meat and does not penetrate or damage the meat. It is also desirable that the pressure be low so that the driving of bacteria into the surface material by means of a water jet is avoided. Furthermore, the meat would absorb water if there were sufficient pressure or temperature to the water. Absorption and surface driving force is to be avoided to prevent transporting bacteria into the material.

Thus, the nozzles create a low velocity fog-like spray mist 84. As seen in FIGURE 4, this fog-like spray is deposited on the meat just above the vacuum mouth 68. A hood 86 is provided over the nozzles to constrain the spray and to protect the nozzles. As seen in FIGURES 2, 3 and 4, the forward edge 89 of the hood is cut back so that it will not come in contact with any contamination that is on the carcass. The wall 64 is cut back to define an opening 88 through which the spray can communicate with the vacuum nozzle 80.

The entire cleaning head 28 forward of the body 46 is preferably made of resilient material so as to conform to the carcass surface, although other material including stainless steel may be used. A soft polymer composition material such as polyethylene is suitable, and thus would be flexible so that it can follow the curvature of the carcass. The width of the vacuum mouth in the head is preferably about 6 to 10 inches wide. It should be sufficiently wide to enable action on a substantial width to remove contamination therefrom. However, it should be sufficiently narrow so that the vacuum is not lost at the edges when the vacuum head is applied to a convexly curved surface.

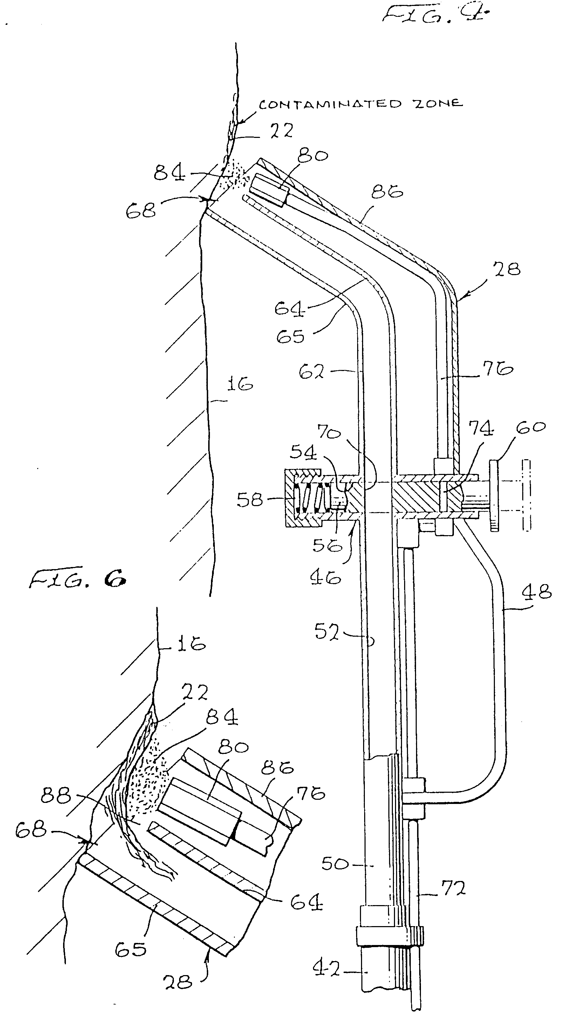

In operation, the operator inspects the carcass as it moves toward him. He takes the vacuum head in his hand, such as the head 28, and moves toward the carcass. He applies the vacuum mouth 68 to the carcass below the point of contamination and simultaneously actuates the valve 56 to draw suction and apply mist. He moves the vacuum head 28 upward to vacuum over the contaminated spot 22. In FIGURES 1, 3 and 4, the head 28 is shown as first applied below the contaminated area 22, and vacuum is applied, together with the mist of cleaning solution. The head 28 is moved upward to slowly pass over the contaminated zone 22. In FIGURE 6, the head is shown as moving up across the contaminated zone 22, together with loosening of the contamination by means of the presence of the spray mist and vacuuming away the contamination, which is shown as including hair. It is important to move the head in the upward direction so that all of the moisture is immediately vacuumed off the surface of the carcass and is not permitted to flow down the carcass. The valve 56 is held in the actuated position this entire time. After the vacuum head 28 is moved upward over the carcass surface to above the contaminated zone 22, the head 28 is removed from the surface and the trumpet valve 56 is released. In this way, contamination is moistened and removed without leaving running moisture on the carcass. The carcass surface may be damp, but not sufficient cleaning solution is left behind to cause the running down of liquid. The head can be dipped in 82°C (180° F.) water to sterilize the tool and avoid cross-contamination between carcasses.

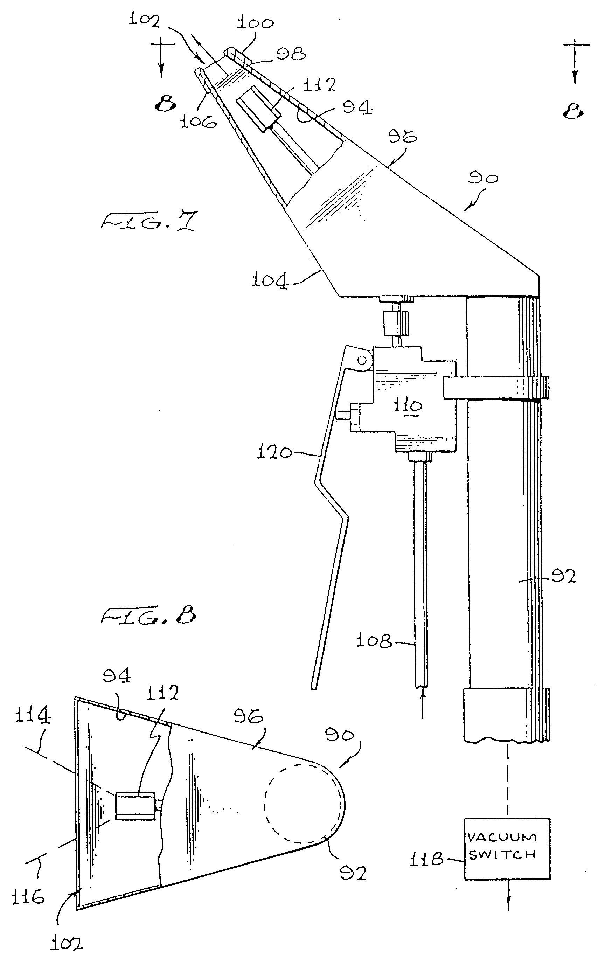

Referring now to FIGURES 7 and 8, there is seen a second preferred embodiment of the invention indicated generally at 90 and comprising a vacuum tube 92 communicating directly with the interior chamber 94 of the cleaning head 96. The upper surface 98 of the head 96 has a thickened rim 100 above the head mouth 102, and the lower surface 104 of the head 96 has a similar thickened rim 106 adjacent the mouth 102, the thickened rims 100 and 106 providing non-tearing smooth contact with the meat. The rim 100 does not extend forwardly as far as the rim 106 so that, when the rim 106 is pressed against the carcass, contaminants can enter the mouth 102 freely, without being scraped off onto the head 96 by the rim 100. The liquid line 108 is connected through a valve body 110 to a mist spray nozzle 112 which is displaced rearwardly from the mouth 102 a distance sufficient to assure both an adequate spray fan, indicated at spray edge lines 114 and 116, and also to avoid contamination of the spray nozzle 112 by direct contact with the contaminants. In this embodiment, the vacuum is operative almost continuously and is only interrupted, as by vacuum switch 118, when it is desired to wash the head 96 as by momentarily dipping the head in a container of continually replenished cleaning and sterilizing solution. During the carcass cleaning operation, the handle 120 is manually operated to actuate the cleaning solution valve within valve body 110.

Another embodiment of the carcass cleaning system of this invention is generally indicated at 210 in FIGURE 9. FIGURE 9 illustrates a portion of the process line in a commercial meat processing facility. Conveyor 212 has a plurality of trolleys which are moved therealong at a desired rate. Trolley 214 carries carcass 216. It is understood that the carcass 216 and trolley 214 represent one of a plurality of such moving from right to left from earlier process steps and moving along to later process steps. The portion of the conveyor shown passes through the work area where the skinned carcass is to have contaminants removed from the surface thereof. In the past, the contaminants, for example, hair, mud and dirt with their usual bacteria, were removed by cutting away the surface material which carries the contaminants. In accordance with this invention, the system 10 removes the surface contamination and disinfects the surface of the contaminated carcass.

The carcass cleaning system 210 comprises a power unit 218 which delivers process fluids to and removes process fluids from the wand 220. The wand 220 is manually moved to bring these process fluids to the contaminated surface of the carcass 216 and remove the fluids and contaminants therefrom.

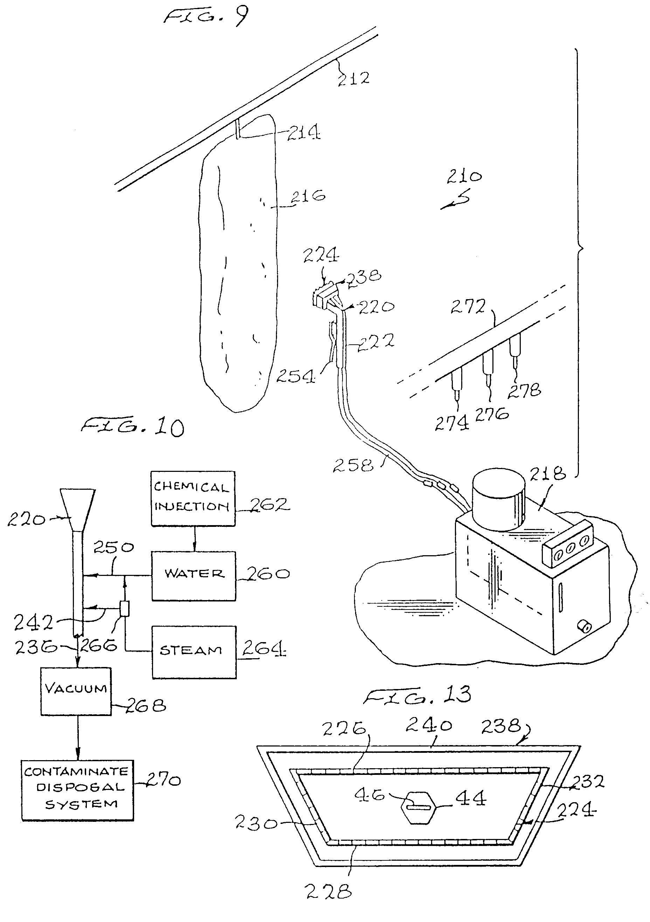

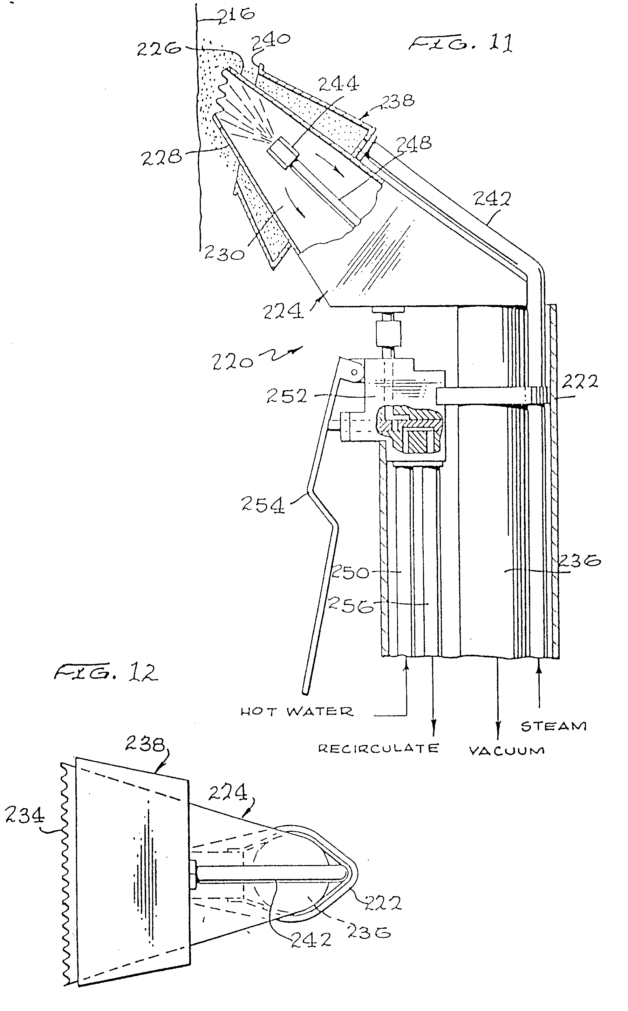

The wand 220 is seen in side elevation, with parts broken away and parts taken in section, in FIGURE 11. The wand has a grip tube 222 which is sized to be grasped in the hand. Attached to the grip tube 222 is vacuum hood 224. The vacuum hood 224 has a trapezoidal opening, as is seen in FIGURE 13. The top and bottom walls 226 and 228 are substantially parallel, while the side walls 230 and 232 slope toward each other, with them closer at the bottom so that the bottom wall 228 is shorter than the top wall 226. These walls are all scalloped at the edge. Scallops 234 are shown in FIGURE 12. The purpose of the scallops 234 is to prevent the vacuum hood 224 from vacuum-locking onto the surface of the carcass 216. The vacuum hood 224 is attached to vacuum tube 236.

Surrounding the vacuum hood 224 is steam hood 238. The face of the steam hood 238 has the same outline as the vacuum hood 224, but is larger and is uniformly spaced therefrom, as seen in FIGURE 13. Furthermore, steam hood 238 is mounted on the outside of the vacuum hood 224, and its lip 240 is short of the scalloped edge of the vacuum hood 224. When the scalloped edge of the vacuum hood 224 is in contact with the carcass 216, the lip 240 of the vacuum hood 224 is spaced from the carcass 216. The spacing of from 1.27 cm to 2.54 cm (one-half to one inch) of the lip 240 of the steam hood 238 behind the scalloped edge of the vacuum hood 224 is sufficient to prevent the steam hood 238 from coming into contact with the carcass 216. The scalloped edge serves the purpose of allowing entry of surrounding material into the vacuum hood 224 to prevent locking up of the vacuum hood 224 against the surface of the carcass 216. However, the more important reason for these serrations is to draw the steam surrounding the vacuum hood 224 into the vacuum hood 224 even when the scalloped edge is against the surface of the carcass 216.

Surrounding the vacuum hood 224 with steam and vacuuming the steam through the scalloped edges into the vacuum hood 224 accomplishes the primary purpose of cleaning the surface of the carcass 216 in most conditions. However, for the most difficult contamination conditions, it is helpful to also spray the surface of the carcass 216 with hot water. In addition, it is important to continuously clean the vacuum hood 224 so that cross contamination between successive carcasses is eliminated. In order to provide these two additional functions, a spray nozzle 244 is provided within the vacuum hood 224, as seen in FIGURES 11 and 13.

As seen in FIGURE 13, the spray opening 246 of the spray nozzle 244 is rectangular to deliver a spray which is wider than it is high to wash down all the interior walls of the vacuum hood 224. In addition, the nozzle opening 246 is directed out of the front of the vacuum hood 224 so that it impinges water onto the surface of the carcass as limited by the configuration and size of the scalloped edge opening of the vacuum hood.

Hot water is supplied to nozzle 244 through tube 248. The supply of hot water from supply tube 250 to nozzle tube 248 is controlled by valve 252. The valve 252 has a manually operable valve actuating handle 254. The valve 252 is shown in the unactuated position of FIGURE 11, and in this position, the supply tube 250 is connected to return tube 256, which permits recirculation of the hot water so that heated water is always present at the valve. When the valve actuating handle 254 is actuated, the return tube 256 is closed and the supply tube 250 supplies hot water to the nozzle tube 248. When the hot water is supplied under pressure, a spray is emitted from spray nozzle 244.

As seen in FIGURE 11, the spray nozzle 244 sprays the inside of the vacuum hood 224 as well as sprays out of the opening in the vacuum hood 224. Grip tube 222 contains the various tubes therein so as to protect the operator from the tubes which may be hot from the hot material therein. The tube 222 is sized so that the operator can grasp it and use his fingers on valve handle 254. A bundle of flexible tubes is connected to the tubes 236, 242, 250 and 256 passing through the grip tube 222. This bundle is seen as bundle 258 and is connected to power unit 218, which supplies the needs.

The wand 220 is grasped by the operator and taken to the surface of the carcass 216. The approach is seen in FIGURE 11, which shows the steam extending forward and around the vacuum head 224. The vacuum head is moved over the surface, in contact with the surface, and is surrounded by steam. The scalloped edge of the vacuum head is moved over at least the contaminated areas of the surface. The flow of steam loosens the contamination, and all steam condensation and contamination is drawn away by the vacuum head 224. In particularly difficult parts to clean, the operator can actuate valve 252 to spray the surface defined by the face of the vacuum hood. The spray water is fully contained within the confines of the vacuum hood when it is bearing against the carcass. If desired, the spray water can be left on during the entire cleaning operation and turned off only when the wand 220 is moved away from the carcass 216.

The power unit 218 supplies the fluid needs through the hose bundle 258. As seen in FIGURE 10, water is supplied from water source 260. The water source 260 is provided with a suitable pump to provide the water at a proper pressure for the nozzle configuration. Antiseptic material may be added to the water from antiseptic tank 262, as described above. The recirculating water in tube 256 is returned to the water supply 260. The water is heated and may be heated from the steam source 264, which delivers steam to hot water tube 250 through valve 266. This supply of steam to the water tube may be supplemental heating or may be primary heating, as desired. The power unit 218 also has a vacuum pump 268 thereon to withdraw the materials through the vacuum hood 224. The materials withdrawn in this manner are disposed of in the contaminate disposal system 270, which is separate from the power unit and which is conventionally available in meat processing plants. If the facility in which the meat processing is accomplished is supplied with the right process streams, the wand 220 can be connected by flexible hose to a manifold. Manifold 272 extends through portions of the facility and has connections 274, 276 and 278 thereon respectively for hot water under pressure connection, steam under pressure connection, and vacuum connection. Such utilities can be conveniently supplied from a central location.

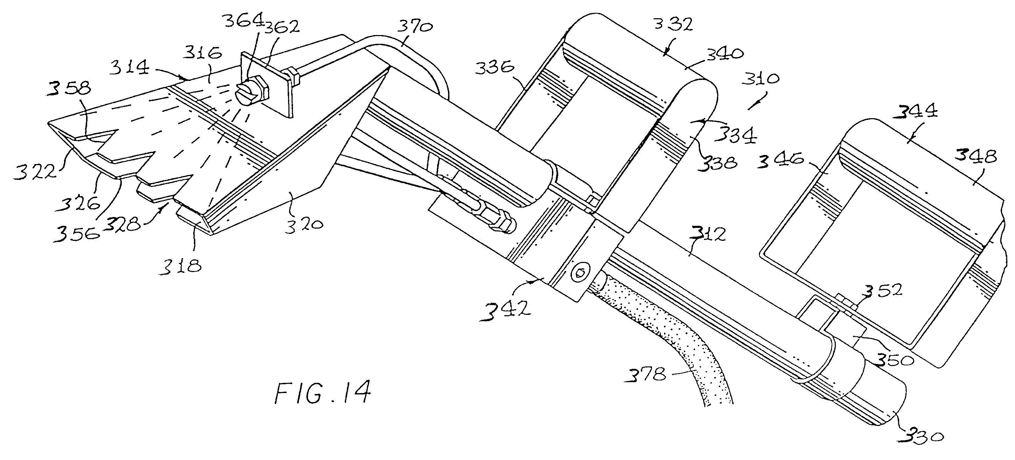

Reference is now made to FIGURES 14-17. A wand 310 has a central member 312 which is a vacuum tube. Hood 314 is attached to the forward end of the vacuum tube and has an interior opening therebetween. The hood is made up of top and bottom walls 316 and 318, left and right side walls 320 and 322, and back wall 324. The walls are arranged so that the side walls diverge and the top and bottom walls converge to a planar front face 326, at which vacuum mouth 328 is defined. The vacuum hood 314 is configured so that, when the plane of the front face is vertical, the axis of the central member vacuum tube 312 is about 45 degrees to the vertical to provide ease of manipulation. The lower end 330 of the vacuum tube is configured for connection to a flexible vacuum hose.

In order to manually position the hood in correct position, it is provided with handles. Forward handle 332 has a U-shaped strap 334, which has side bars 336 and 338 extending upward to carry graspable handle rod 340 therebetween. Manifold block 342 is engaged under the central tube and is clamped to strap 334 to engage the tube 312 therebetween.

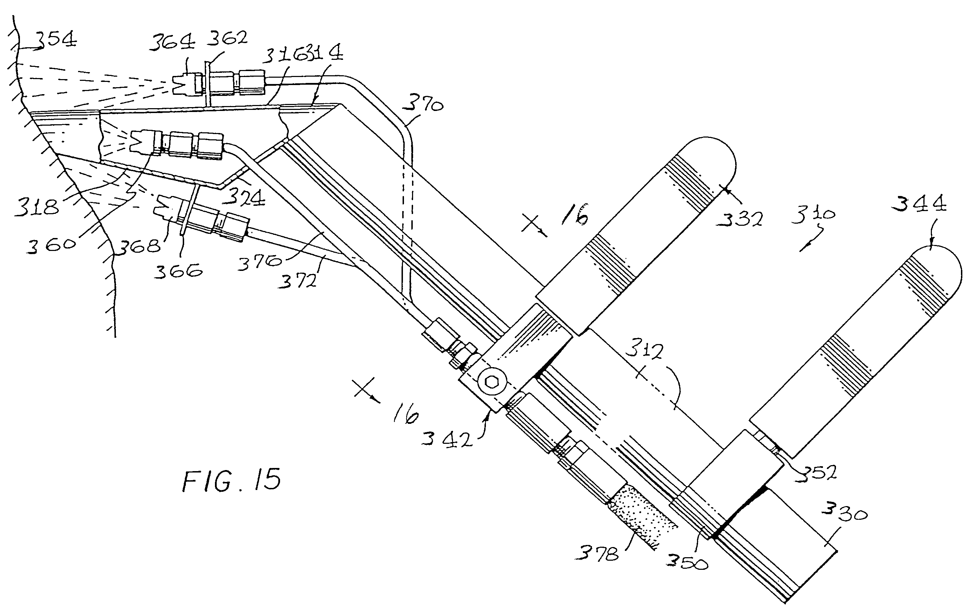

The rear handle 344 also has a U-shaped strap 346 between which is secured handle bar 348. Clamp 350 is clamped around the central vacuum tube 312 below the manifold 342. Strap 346 is pivotally mounted on clamp 350 on pivot pin 352 so that the handle bar 348 is rotatable on an axis substantially at a right angle to the central axis of tube 312. The handles can be positioned with respect to each other at other angles to maximize the comfort and the ease of the user. It is thus seen that the wand can be conveniently grasped and maneuvered. It can be taken to the surface 354, see FIGURE 15, of a carcass which is to have its surface cleaned by the wand. It is seen that the vacuum hood might attach itself to the surface by means of the vacuum therein. In order to minimize this, a number of notches, such as notches 356 and 358 are cut in the bottom and top walls of the vacuum hood.

In order to enhance the cleaning, water spray nozzle 360 is positioned interiorly of the hood and is directed toward vacuum mouth 328. In addition, top bracket 362 carries top steam nozzle 364. Bottom bracket 66 carries bottom steam nozzle 368. The brackets 362 and 366 are respectively secured to the top and bottom walls 316 and 318 of the vacuum hood. Each of the steam nozzles is directed to deliver a fan of steam which diverges both horizontally and vertically, as seen in FIGURES 14 and 15, so that the steam is sprayed onto the carcass 354 adjacent to the hood 314, both just above and just below the hood, and also onto the top and bottom walls 316 and 318 of the hood 314. The notches 356 and 358 are sufficiently large and are spaced along the top and bottom walls so that the water, steam and contaminants are drawn into the vacuum hood.

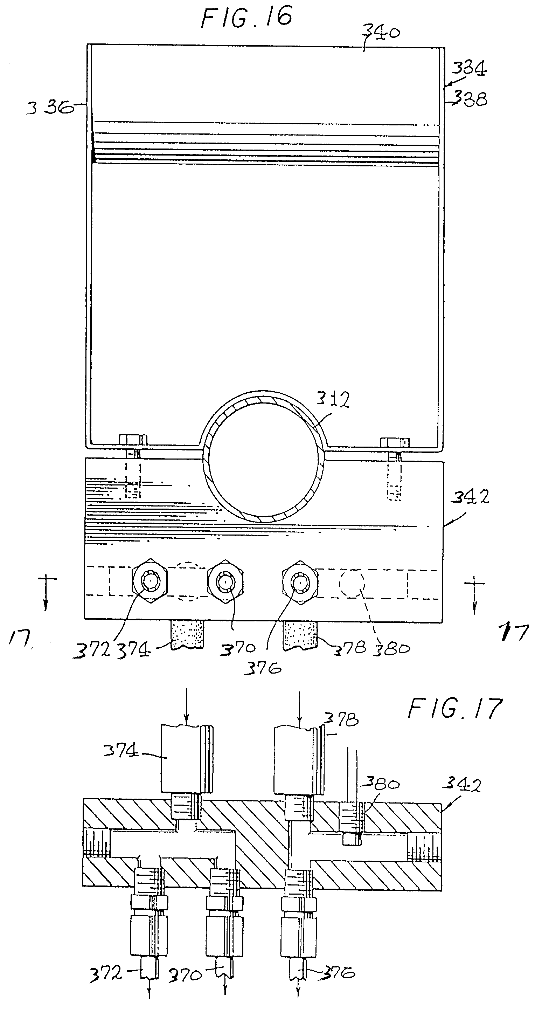

Steam is supplied to the top nozzle 364 by steam line 370, and steam is supplied to the bottom nozzle 368 by means of steam line 372. These are connected to the manifold 342, as seen in FIGURE 17, and steam line 374 supplies steam to the manifold.

In a similar way, hot water is delivered to nozzle 360 by means of hot water line 376. The hot water line 376 is connected through the manifold and is supplied by flexible hot water line 378. The source of these fluids can be a utility cart which supplies the necessary fluids and draws the vacuum. On the other hand, these lines can be connected through valves to steam and water lines and vacuum lines permanently installed in the factory.

A convenient way of supplying hot water is to introduce steam into the water to bring it to the desired temperature. The United States FDA requires, for example, a minimum hot water temperature of 82°C.(180 degrees F.)to assure sterilization. Thus, an automatic valve can be set to supply sufficient steam to the water flow to bring it up to about 85°C. (185 degrees F.)to ensure that the requirements at the surface of the carcass are met. Such automatic valves are well known. In order to assure the proper water temperature, temperature sensor 380 is fit into manifold 342, see FIGURE 17, in direct contact with the flowing water. The temperature sensor can be connected to raise the water temperature should it get too low. In the typical installation, an automatic valve controls the water temperature and the temperature sensor 380 controls a steam bypass to introduce more steam to the water. The valves and connectors can be conveniently positioned on a cart which has corresponding connections to the utility lines in the facility. As examples of preferred and operative values within the indicated parameters, hot water pressure at the nozzle is 68950-138900 Pa (10-20 psi), depending upon nozzle shape and size, and steam pressure is 3.4 x 10⁶ - 4.8 x 10⁶ Pa (50-70 psi), depending upon steam nozzle shape and positioning.

In the normal meat processing line, an overhead conveyor continuously moves hanging carcasses past the work station. When there is sufficient volume of carcasses past the work station, there is no need to turn off the fluids to the wand. For example, the carcasses may be moving and, therefore, require cleaning at the rate of 200 carcasses per hour. The workman applies the vacuum mouth of the hood to the locations on the surface of the carcass where cleaning is desired. With the carcasses coming one after the other, shutoff is not necessary. When desired, the shutoff is accomplished by valving on the cart. The spraying of hot water interiorly of the vacuum hood and steam exteriorly of the vacuum hood sterilizes the hood between successive carcasses being cleaned, as well as during the cleaning operation itself.

It is important to note that, in normal practice, it is necessary to dip into sterilizing solution any tool which comes in contact with successive carcasses. This is to prevent the contamination of an earlier carcass reaching a later one. In the present case, the spray of hot water into the interior of the vacuum hood overcomes this chance of carrying contamination forward. While the spray of water may not be necessary to remove contamination, the water spray must be turned on between successive uses on successive carcasses in order to achieve the sterilization of the vacuum hood.

## Claims

1. A carcass cleaning system comprising:
means (34; 108; 260, 264; 374, 378) for supplying pressurized cleaning fluid;
a vacuum source (36; 118; 268; 312);
a vacuum nozzle means (62; 92; 224; 314);
a carcass cleaning head (28; 96; 220; 314) which is manually engageable and manually positionable, the carcass cleaning head having walls (64, 65, 66, 67; 98, 104; 226, 228, 230, 232; 316, 318, 320, 322) defining a vacuum mouth (68; 102; 328) which can be applied against a surface of a carcass below contamination thereon, the carcass cleaning head having a cleaning fluid nozzle (78, 80, 82; 112; 238; 360, 364, 368) adjacent said vacuum mouth;
whereby:
the vacuum nozzle means controls the application of vacuum to the vacuum mouth;
means (56; 110; 252; 342) are provided for controlling the flow of cleaning fluid to said fluid nozzle; and
means (48; 92; 222; 332; 344) are provided for positioning the vacuum mouth adjacent contamination on a carcass to remove the contamination therefrom,
characterised in that the carcass cleaning head is configured such that the walls defining the vacuum mouth do not vacuum-lock on the surface of the carcass.

2. The system of Claim 1 further characterized in that means for supplying cleaning fluid (34; 108; 260, 264; 374, 378), said cleaning fluid being a water-base cleaning fluid at a temperature of at least 72°C (161°F).

3. The system of Claims 1 or 2 characterized in that said cleaning fluid contains an antiseptic fluid.

4. The system of Claims 1 to 3 characterized in that said head (28; 96; 220; 314) includes a manually operable valve (56; 110; 252) so that said vacuum nozzle (62; 92; 224; 314) is connected to said vacuum mouth (68; 102; 328) by actuation of said valve.

5. The system of Claims 1 to 4 characterized in that said head (28; 96; 220; 314) has thereon a valve (56; 110; 252) for controlling the flow of cleaning fluid to said nozzle (78, 80, 82; 112; 238; 360, 364, 368) so that actuation of said valve permits delivery of cleaning fluid from said nozzle.

6. The system of Claim 1 to 5 characterized in that said vacuum mouth (68; 102; 328) is formed in a flexible material so that said vacuum mouth can flex to accommodate against uneven surfaces.

7. The system as claimed in Claim 1 characterized by:
a source of cleaning fluid under pressure (34);
means (50) for connecting the carcass cleaning head (28) to the source of cleaning fluid under pressure and the vacuum source, including flexible hoses, said vacuum mouth (68) being connected to the vacuum source (36) and a vacuum valve (70) therebetween;
the cleaning fluid nozzle (78, 80, 82) on the head being positioned above the vacuum mouth, the nozzle being connected to the source of cleaning fluid under pressure, a valve (56) controlling the flow of cleaning fluid to said nozzle, said head being positionable against the surface of a carcass and said vacuum valve being actuatable to apply a vacuum to said vacuum mouth when said vacuum mouth is against a carcass, said cleaning fluid valve being actuatable when said vacuum valve is actuated so that cleaning fluid is applied adjacent to carcass and said vacuum mouth vacuums away the cleaning fluid and adjacent contamination.

8. The system of Claim 7 characterized in that said valves (56, 70) are connected together so that said cleaning fluid valve can be open only when said vacuum valve is open.

9. The system of Claims 7 or 8 characterized in that said head (28) has a body (46) and said body contains a valve bore (54), a valve (56) in said valve bore, said valve having both a vacuum opening (70) and a cleaning fluid opening (74) therethrough so that actuation of said valve permits the delivery of cleaning fluid under pressure to said nozzle (78, 80, 82) and permits the vacuum withdrawal of material at said vacuum mouth (68).

10. The system of Claim 9 characterized in that said body (46) is configured to be manually graspable and said valve (56) is positioned to be manually actuated with the same hand while said body is grasped and manipulated.

11. The system of Claim 10 characterized in that said manually graspable portion of said body is a handle (48) and said valve (56) is a trumpet valve positioned adjacent said handle.

12. The system of Claims 7 to 11 characterized in that said vacuum mouth (68) is made of flexible material so that said vacuum mouth can flex to accommodate to the exterior configuration against which it is placed.

13. The system of Claims 7 to 12 characterized in that a hood (86) is positioned over said nozzle (78, 80, 82) so that cleaning fluid emitted from said nozzle is constrained to a position against said carcass and adjacent said vacuum mouth (68).

14. The system of Claims 7 to 13 characterized in that said source of cleaning fluid (34) comprises a source of water-base cleaning fluid at a temperature of at least 72°C (161°F).

15. The system of Claims 7 to 14 characterized in that said cleaning fluid contains an antiseptic fluid.

16. A method of cleaning contaminants from the surface of a carcass comprising the steps of:
applying a vacuum nozzle (62; 92; 224; 314) to the exterior of a carcass;
delivering a mist/spray of cleaning fluid to the carcass directly above the vacuum nozzle; and
moving the vacuum nozzle upward to vacuum contamination and cleaning fluid from the carcass surface,
characterized in providing means such that the vacuum nozzle does not vacuum-lock on the surface of the carcass.

17. The method of Claim 16 including the step of controlling the flow of cleaning fluid and vacuum so that cleaning fluid is delivered only when vacuum is applied to the vacuum nozzle (62; 92; 224; 314).

18. The method of Claims 16 or 17 further including the provision of a hood (86) to limit dispersion of the cleaning fluid to a position directly above the vacuum nozzle.

19. The method of Claims 16 to 18 further including the manual control of positioning and upward movement of the vacuum nozzle (62; 92; 224; 314) and manual control of the concurrent supply of cleaning fluid and vacuum.

20. A carcass cleaning system comprising:
a carcass cleaning wand (220) which can be manually maneuvered to the surface of the carcass to be cleaned;
a vacuum hood (62; 224) on said wand, said vacuum hood being defined by walls (64, 65, 66, 67; 226, 228, 230, 232);
means (36; 268) connected to said vacuum hood for drawing vacuum on said hood to draw materials between said walls of said hood toward said vacuum means,
characterized by:
a fluid hood (86; 238) provided adjacent said vacuum hood for delivering fluid around said vacuum hood;
means (34; 260, 264) connected to said fluid hood for supplying fluid to said fluid hood; and
means (244, 246) for sterilizing said vacuum hood so that contamination is not carried thereon, and
further characterized in that at least some of said walls are configured so that said vacuum hood does not lock onto a surface by vacuum.

21. The system of Claim 20 characterized in that said means (244, 246) for sterilizing comprises a hot water spray nozzle configured and positioned to spray water on the interior of said walls (64, 65, 66, 67; 226, 228, 230, 232) of said vacuum hood (62; 224).

22. The system of Claims 20 to 21 characterized in that said spray nozzle (244) is so directed so that at least some of the water sprayed therefrom sprays out of the opening of said vacuum hood (224) to impinge on a carcass against which said vacuum hood lies so as to aid in cleaning of the carcass.

23. The system of Claims 20 to 22 characterized by a source (260) of hot water under pressure and including a valve (56; 252) on said wand, said source of hot water under pressure being connected to said valve and said valve being connected to said nozzle (244) so that actuation of said valve sprays hot water from said nozzle.

24. The system of Claim 23 characterized in that said valve (252) has a manually actuatable handle (254) on said wand (220) so that the operator can move said wand and actuate said handle to spray water, as desired.

25. The system of Claims 20 to 24 characterized in that said vacuum hood (224) has an uneven edge (240) to prevent lock on.

26. The system of Claims 20 to 25 characterized in that said fluid hood (238) is a steam hood which surrounds said vacuum hood (224) and has a lip (240) defining the front edge of said steam hood, said vacuum hood extending through said steam hood and past said lip.

27. The system of Claim 24 characterized in that said valve (252) has a recirculation return tube (256) connected thereto and said valve is internally configured so that in the unactuated position, hot water passes through said valve to said return tube so that hot water is circulated through said valve.

28. The system of Claim 25 characterized in that said walls (226, 228, 230, 232) define a trapezoidal shaped opening of said vacuum hood (224).

29. The system of Claim 20 characterized in that the walls (226, 228, 230, 232) of the vacuum hood (224) define an opening and said walls terminate in an uneven edge (240) so that the vacuum hood does not become suction locked onto a surface, and means (236) for connecting vacuum to said vacuum hood to draw a vacuum at said opening of said vacuum hood;
the fluid steam hood (238) is a steam hood mounted to deliver steam at the vacuum hood so that the steam is suctioned away together with contaminants on the surface into said vacuum hood.

30. The carcass cleaning system of Claim 29 characterized in that said steam hood (238) surrounds said vacuum hood (224), said steam hood having an opening and an edge (240) defined by a lip (240), said vacuum hood extending through said opening and past said lip so that said lip is positioned away from a carcass surface.

31. The carcass cleaning system of Claim 29 or 30 characterized in that said uneven edge (240) of said vacuum hood (224) is scalloped edge.

32. The carcass cleaning system of Claims 29 to 31 characterized in that said means (244, 246) for sterilizing by hot water spray for cleaning the interior walls (226, 228, 230, 232) of said vacuum hood (224) is hot water delivered by a nozzle (244) within said vacuum hood, and further including means (250, 260) for supplying hot water under pressure.

33. The carcass cleaning system of Claims 29 to 33 characterized by means (250, 260) for supplying hot water under pressure and a valve (252) between said means and said nozzle (244), said valve being controlled by a manually actuatable handle (254) on said wand (220) so that the operator of said wand can spray sterilizing water as required.

34. The carcass cleaning system of Claims 29 to 33 characterized in that said nozzle (244) is directed to spray out sterilizing water against the interior walls (226, 228, 230, 232) of said vacuum hood (224) and through the opening in said vacuum hood in impinge upon an adjacent carcass surface in order to further clean the adjacent carcass surface, with the steam, contaminants and water being substantially vacuumed away by said vacuum hood.

35. The carcass cleaning system of Claims 29 to 34 characterized by a water return tube (256) connected to said valve (252), said valve being configured so that when in an unactuated position, water flows from said source (260) of hot water to said return tube to maintain flow through said valve in both the actuated and unactuated positions.

36. The carcass cleaning system or Claims 29 to 35 characterized in that a power unit (218) is connected to said wand (220) by flexible connectors (258), said power unit providing hot water and steam to said wand and providing vacuum to draw water, steam and contaminants from said wand.

37. The system of Claim 20 characterized by a hot water spray nozzle (78, 80, 82; 244) within the hood (86; 224), said water spray nozzle being positioned and directed so that it delivers a spray of hot water to said mouth (68; 226, 228, 230, 232) of said hood and through said mouth for direction onto such carcass surface.

38. The carcass cleaning system of Claim 37 characterized in that said hood (224) has a top wall (226) and a bottom wall (228), one said top and bottom walls being said uneven wall (226, 228) and steam nozzle is directed along said uneven wall.

39. The carcass cleaning system of Claim 38 characterized in that said steam nozzle is a first steam nozzle and there is also a second steam nozzle, said first steam nozzle being directed along said top wall (226) of said hood (224) and said second steam nozzle being directed along said bottom wall (228) of said hood so that steam from said nozzles impacts a carcass surface adjacent said mouth (226, 228, 230, 232) of said hood.

40. The carcass cleaning system of Claim 39 characterized in that both said top and bottom walls (226, 228) have uneven edges (240) thereon so that steam, water and contaminants on such carcass surface adjacent said top and bottom walls are drawn into said vacuum hood (224).

41. The carcass cleaning system of Claim 38 to 40 characterized in that said uneven edge (240) is a notched edge.

42. The carcass cleaning system of Claim 38 characterized by including at least one manually graspable handle (332, 344) secured to said wand (220).

43. The carcass cleaning system of Claim 42 characterized in that there are first and second manually graspable handles (332, 344) secured to said wand (220).

44. The carcass cleaning system of Claim 43 characterized in that at least one of said handles (332, 344) is adjustable with respect to said wand (220) so that said handle can be adjusted for the user's comfort.

45. The system of claim 20 characterized by:
a water spray nozzle (244) within said hood (224), said water spray nozzle being positioned and directed to spray hot water out through said opening in said hood;
a steam nozzle (364), said steam nozzle being attached to said hood and being positioned and directed to spray steam adjacent said opening in said hood; and
means (236) for connecting vacuum to said hood, means (250) for connecting hot water under pressure to said water spray nozzle and means (242) for connecting steam under pressure to said steam nozzle so that said wand (220) can be manipulated to bring said hood adjacent such selected contaminated surface on a carcass so that water spray and steam spray wash the contamination loose and sterilize a portion of the carcass adjacent said hood and vacuum withdraws the contamination, water and steam from adjacent said hood.

46. The carcass cleaning system of Claim 45 characterized in that said hood (224) is defined by top (226) and bottom walls (228) and said steam spray is directed along one of said top and bottom walls.

47. The carcass cleaning system of Claim 46 characterized in that there are two steam sprays (364, 368), one being adjacent each of said top and bottom walls (226, 228) so that steam is sprayed adjacent both said top and bottom walls of said hood (224).

48. The carcass cleaning system of Claim 47 characterized in that both said top and bottom walls (226, 228) have openings therein adjacent said mouth (226, 228, 230, 232) of said hood (224) so that steam and contaminants are drawn into said hood adjacent both said top and bottom walls.

49. The carcass cleaning system of Claim 45 characterized in that said steam spray is adjacent a wall (226, 228, 230, 232) defining said hood (224), said wall having openings therein adjacent said mouth (226, 228, 230, 232) of said hood to permit at least some of said steam to be drawn into said hood by vacuum in said hood.

50. The carcass cleaning system of Claim 49 characterized in that there is at least one manually graspable handle (332, 344) on said wand (220) to aid in manual positioning of said wand.

51. The system of Claim 20 characterized by:
the wand (220) comprises a central vacuum tube (236) and a hood (224) on said vacuum tube, said hood being formed of top and bottom walls (226, 228) as well as left are right walls (230, 232) to define a vacuum mouth (226, 228, 230, 232), said walls substantially terminating in a plane, said plane being at an angle with respect to said central vacuum tube, at least one of said top and bottom walls having openings therein adjacent said mouth;
a hot water spray nozzle (244) positioned and directed to spray hot water out of said mouth;
a steam nozzle (364, 368) positioned and directed to spray steam outside of said hood adjacent said mouth along said wall having openings therein; and
means for connecting a flexible vacuum hose (258) to said vacuum tube, a flexible hot water pressure hose (258) to said water nozzle and a flexible steam pressure hose (258) to said steam nozzle so that, when said mouth is applied to the contaminated surface of a carcass to be cleaned, hot water sprays the surface of the carcass within the bounds defined by said mouth, steam is sprayed adjacent said mouth and steam, water and contamination are vacuumed away by said hood through said vacuum tube for disposal to carry contamination, water and steam away from the surface of the carcass being cleaned.

52. The carcass cleaning system of Claim 51 characterized in that both said top and bottom walls (226, 228) of said hood (224) having openings therein and there is a steam nozzle (364, 368) positioned adjacent both said top and bottom walls to deliver steam adjacent both said top and bottom walls of said hood.

53. The carcass cleaning system of Claim 51 characterized in that said steam nozzle (364, 368) is a first steam nozzle and said first steam nozzle is positioned on said wand (220) to direct steam along said top wall (226) and there is a second steam nozzle (364, 368), said second steam nozzle being positioned to direct steam along said bottom wall (228), said openings comprising notches (356, 358) in both said top wall and said bottom wall adjacent said mouth (226, 228, 230, 232) of said hood (224).

54. The carcass cleaning system of Claim 53 characterized in that there is a water temperature sensor (380) adjacent said hot water nozzle (244) so that said hot water sensor can sense and signal when the temperature of water delivered to said hot water nozzle is below a reference temperature.

55. The carcass cleaning system of Claim 51 characterized in that there are two manually graspable handles (332, 344) on said central tube (236) for grasp by the operator to position said wand (220), at least one of said handles (332, 344) being adjustable for operator comfort.

## Patentansprüche

1. Schlachtkörperreinigungsanlage, umfassend:
Einrichtungen (34; 108; 260, 264; 374, 378) für die Zufuhr von unter Druck stehender Reinigungsflüssigkeit;
eine Vakuumquelle (36; 118; 268; 312);
eine Vakuumdüseneinrichtung (62; 92; 224; 314);
einen Schlachtkörperreinigungskopf (28; 96; 220; 314), der von Hand eingesetzt und positioniert werden kann, wobei der Schlachtkörperreinigungskopf Wände (64, 65, 66, 67; 98, 104; 226, 228, 230, 232; 316, 318, 320, 322) aufweist, die eine Vakuumöffnung (68; 102; 328) begrenzen, die an eine Oberfläche eines Schlachtkörpers unterhalb einer darauf befindlichen Verunreinigung angelegt werden kann, wobei der Schlachtkörperreinigungskopf im Bereich der Vakuumöffnung eine Reinigungsflüssigkeitsdüse (78, 80, 82; 112; 238; 360, 364, 368) aufweist;
wodurch:
die Vakuumdüseneinrichtung die Beaufschlagung der Vakuumöffnung mit Vakuum steuert;
Einrichtungen (56; 110; 252; 342) vorgesehen sind, die den Zustrom von Reinigungsflüssigkeit zu der Flüssigkeitsdüse steuern; und
Einrichtungen (48; 92; 222; 332; 344) vorgesehen sind, die die Vakuumöffnung neben einer Verunreinigung auf einem Schlachtkörper positionieren, um die Verunreinigung von diesem zu entfernen,
dadurch gekennzeichnet, daß der Schlachkörperreinigungskopf so konfiguriert ist, daß die die Vakuumöffnung begrenzenden Wände sich nicht durch das Vakuum auf der Oberfläche des Schlachtkörpers festsaugen.

2. Anlage nach Anspruch 1, des weiteren gekennzeichnet durch Einrichtungen (34; 108; 260, 264; 374, 378) für die Zufuhr von Reinigungsflüssigkeit, bei der es sich um eine wasserhaltige Reinigungsflüssigkeit mit einer Temperatur von mindestens 72°C (161°F) handelt.

3. Anlage nach Anspruch 1 oder 2, dadurch gekennzeichnet, daß die Reinigungsflüssigkeit eine antiseptische Flüssigkeit enthält.

4. Anlage nach Anspruch 1 bis 3, dadurch gekennzeichnet, daß der Kopf (28; 96; 220; 314) ein von Hand betätigbares Ventil (56; 110; 252) umfaßt, so daß die Vakuumdüse (62; 92; 224; 314) durch Betätigen des Ventils mit der Vakuumöffnung (68; 102; 328) verbunden wird.

5. Anlage nach Anspruch 1 bis 4, dadurch gekennzeichnet, daß sich auf dem Kopf (28; 96; 220; 314) ein Ventil (56; 110; 252) befindet, um den Zustrom von Reinigungsflüssigkeit zu der Düse (78, 80, 82; 112; 238; 360, 364, 368) zu steuern, so daß durch Betätigen des Ventils Reinigungsflüssigkeit aus der Düse abgegeben werden kann.

6. Anlage nach Anspruch 1 bis 5, dadurch gekennzeichnet, daß die Vakuumöffnung (68; 102; 328) aus einem biegsamen Material besteht, so daß die Vakuumöffnung nachgiebig ist und sich an unebene Oberflächen anpassen kann.

7. Anlage nach Anspruch 1, gekennzeichnet durch:
eine Quelle (34) für unter Druck stehende Reinigungsflüssigkeit;
eine Einrichtung (50) zum Anschluß des Schlachtkörperreinigungskopfes (28) an die Quelle für unter Druck stehende Reinigungsflüssigkeit und an die Vakuumquelle, umfassend biegsame Schläuche, wobei die Vakuumöffnung (68) mit der Vakuumquelle (36) und einem dazwischen befindlichen Vakuumventil (70) verbunden ist;
wobei die Reinigungsflüssigkeitsdüse (78, 80, 82) auf dem Kopf über der Vakuumöffnung positioniert ist, die Düse mit der Quelle für unter Druck stehende Reinigungsflüssigkeit verbunden ist, ein Ventil (56) den Zustrom von Reinigungsflüssigkeit zu der Düse steuert, der Kopf an der Oberfläche eines Schlachtkörpers positioniert werden kann, und das Vakuumventil betätigt werden kann, um die Vakuumöffnung mit einem Vakuum zu beaufschlagen, wenn die Vakuumöffnung an einem Schlachtkörper anliegt, wobei das Reinigungsflüssigkeitsventil betätigt werden kann, wenn das Vakuumventil betätigt wird, so daß Reinigungsflüssigkeit auf den Schlachtkörper aufgebracht wird und die Vakuumöffnung die Reinigungsflüssigkeit und dort befindliche Verunreinigungen wegsaugt.

8. Anlage nach Anspruch 7, dadurch gekennzeichnet, daß die Ventile (56, 70) miteinander verbunden sind, so daß das Reinigungsflüssigkeitsventil nur dann geöffnet sein kann, wenn das Vakuumventil geöffnet ist.

9. Anlage nach Anspruch 7 oder 8, dadurch gekennzeichnet, daß der Kopf (28) einen Körper (46) besitzt, und der Körper eine Ventilbohrung (54) und ein Ventil (56) in der Ventilbohrung aufweist, wobei das Ventil sowohl eine Vakuumöffnung (70) als auch eine Reinigungsflüssigkeitsöffnung (74) aufweist, so daß durch Betätigen des Ventils unter Druck stehende Reinigungsflüssigkeit an die Düse (78, 80, 82) abgegeben werden kann und Stoffe an der Vakuumöffnung (68) durch das Vakuum abgezogen werden können.

10. Anlage nach Anspruch 9, dadurch gekennzeichnet, daß der Körper (46) so konfiguriert ist, daß er mit der Hand ergriffen werden kann, und daß das Ventil (56) so positioniert ist, daß es mit der gleichen Hand von Hand betätigt werden kann, während der Körper ergriffen und damit hantiert wird.

11. Anlage nach Anspruch 10, dadurch gekennzeichnet, daß es sich bei dem mit der Hand ergreifbaren Abschnitt des Körpers um einen Handgriff (48) handelt, und das Ventil (56) ein im Bereich des Handgriffs positioniertes Trompetenventil ist.

12. Anlage nach Anspruch 7 bis 11, dadurch gekennzeichnet, daß die Vakuumöffnung (68) aus einem biegsamen Material besteht, so daß die Vakuumöffnung nachgiebig ist und sich an die Außenform, an die sie angelegt wird, anpassen kann.

13. Anlage nach Anspruch 7 bis 12, dadurch gekennzeichnet, daß eine Haube (86) über der Düse (78, 80, 82) positioniert ist, so daß aus der Düse abgegebene Reinigungsflüssigkeit auf eine bestimmte Position in bezug auf den Schlachtkörper und im Bereich der Vakuumöffnung (68) begrenzt ist.

14. Anlage nach Anspruch 7 bis 13, dadurch gekennzeichnet, daß die Reinigungsflüssigkeitsquelle (34) eine Quelle für wasserhaltige Reinigungsflüssigkeit mit einer Temperatur von mindestens 72°C (161°F) umfaßt.

15. Anlage nach Anspruch 7 bis 14, dadurch gekennzeichnet, daß die Reinigungsflüssigkeit eine antiseptische Flüssigkeit enthält.

16. Verfahren zur Entfernung von Verunreinigungen von der Oberfläche eines Schlachtkörpers, umfassend die folgenden Schritte:
Anlegen einer Vakuumdüse (62; 92; 224; 314) an die Außenseite eines Schlachtkörpers;
Abgeben eines Sprühnebels/Sprühstrahls von Reinigungsflüssigkeit an den Schlachtkörper direkt über der Vakuumdüse; und
die Vakuumdüse nach oben bewegen, um Verunreinigungen und Reinigungsflüssigkeit von der Oberfläche des Schlachtkörpers wegzusaugen,
dadurch gekennzeichnet, daß die Einrichtungen so bereitgestellt werden, daß sich die Vakuumdüse nicht auf der Oberfläche des Schlachtkörpers festsaugt.

17. Verfahren nach Anspruch 16, umfassend den Schritt der Steuerung des Zustroms von Reinigungsflüssigkeit und des Vakuums derart, daß Reinigungsflüssigkeit nur dann abgegeben wird, wenn die Vakuumdüse (62; 92; 224; 314) mit Vakuum beaufschlagt wird.

18. Verfahren nach Anspruch 16 oder 17, des weiteren umfassend die Bereitstellung einer Haube (86), um die Ausbreitung der Reinigungsflüssigkeit auf eine Position direkt über der Vakuumdüse zu begrenzen.

19. Verfahren nach Anspruch 16 bis 18, des weiteren umfassend die manuelle Steuerung der Positionierung und Aufwärtsbewegung der Vakuumdüse (62; 92; 224; 314) und die manuelle Steuerung der gleichzeitigen Zufuhr von Reinigungsflüssigkeit und Vakuum.

20. Schlachtkörperreinigungsanlage, umfassend:
einen Schlachtkörperreinigungsstab (220), der von Hand zur Oberfläche des zu reinigenden Schlachtkörpers manövriert werden kann;
eine Vakuumhaube (62; 224) auf dem Stab, wobei die Vakuumhaube durch Wände (64, 65, 66, 67; 226, 228, 230, 232) begrenzt wird;
Einrichtungen (36; 268), die mit der Vakuumhaube verbunden sind, um Vakuum auf die Haube zu ziehen, damit zwischen den Wänden der Haube befindliche Stoffe zu der Vakuumeinrichtung gezogen werden,
gekennzeichnet durch:
eine Flüssigkeitshaube (86; 238) im Bereich der Vakuumhaube, um Flüssigkeit um die Vakuumhaube herum abzugeben;
Einrichtungen (34; 260, 264), die mit der Flüssigkeitshaube verbunden sind, um Flüssigkeit zu der Flüssigkeitshaube zu leiten; und
Einrichtungen (244, 246) zum Sterilisieren der Vakuumhaube, damit keine Verunreinigungen auf diese gelangen; und
des weiteren dadurch gekennzeichnet, daß wenigstens einige der Wände so konfiguriert sind, daß sich die Vakuumhaube nicht auf einer Oberfläche festsaugt.

21. Anlage nach Anspruch 20, dadurch gekennzeichnet, daß die Einrichtung (244, 246) zum Sterilisieren eine Heißwassersprühdüse umfaßt, die so konfiguriert und positioniert ist, daß sie Wasser auf die Innenseite der Wände (64, 65, 66, 67; 226, 228, 230, 232) der Vakuumhaube (62; 224) sprüht.

22. Anlage nach Anspruch 20 bis 21, dadurch gekennzeichnet, daß die Sprühdüse (244) so ausgerichtet ist, daß wenigstens ein Teil des von ihr versprühten Wassers aus der Öffnung der Vakuumhaube (224) gesprüht wird und auf einem Schlachtkörper auftrifft, an dem die Vakuumhaube anliegt, um zur Reinigung des Schlachtkörpers beizutragen.

23. Anlage nach Anspruch 20 bis 22, gekennzeichnet durch eine Quelle (260) für unter Druck stehendes heißes Wasser und umfassend ein Ventil (56; 252) an dem Stab, wobei die Quelle für unter Druck stehendes heißes Wasser mit dem Ventil verbunden ist und das Ventil mit der Düse (244) verbunden ist, so daß durch Betätigen des Ventils heißes Wasser aus der Düse gesprüht wird.

24. Anlage nach Anspruch 23, dadurch gekennzeichnet, daß das Ventil (252) einen von Hand betätigbaren Handgriff (254) an dem Stab (220) aufweist, so daß der Bediener je nach Bedarf den Stab bewegen und den Handgriff betätigen kann, um Wasser zu versprühen.

25. Anlage nach Anspruch 20 bis 24, dadurch gekennzeichnet, daß die Vakuumhaube (224) eine unebene Kante (240) besitzt, um das Festsaugen zu verhindern.

26. Anlage nach Anspruch 20 bis 25, dadurch gekennzeichnet, daß die Flüssigkeitshaube (238) eine Dampfhaube ist, die die Vakuumhaube (224) umgibt und eine Lippe (240) aufweist, die die Vorderkante der Dampfhaube begrenzt, wobei sich die Vakuumhaube durch die Dampfhaube hindurch und an der Lippe vorbei erstreckt.

27. Anlage nach Anspruch 24, dadurch gekennzeichnet, daß das Ventil (252) ein damit verbundenes Rücklaufrohr (256) besitzt und das Ventil innen so konfiguriert ist, daß in der Ruhestellung heißes Wasser durch das Ventil zu dem Rücklaufrohr fließt, so daß heißes Wasser durch das Ventil geführt wird.

28. Anlage nach Anspruch 25, dadurch gekennzeichnet, daß die Wände (226, 228, 230, 232) eine trapezförmige Öffnung der Vakuumhaube (224) begrenzen.

29. Anlage nach Anspruch 20, dadurch gekennzeichnet, daß die Wände (226, 228, 230, 232) der Vakuumhaube (224) eine Öffnung begrenzen und die Wände in einer unebenen Kante (240) enden, so daß sich die Vakuumhaube nicht auf einer Oberfläche festsaugt, und daß eine Einrichtung (236) vorgesehen ist, die das Vakuum an die Vakuumhaube anschließt, um ein Vakuum zu der Öffnung der Vakuumhaube zu ziehen;
wobei die Flüssigkeitsdampfhaube (238) eine Dampfhaube ist, die zur Abgabe von Dampf an die Vakuumhaube dient, so daß der Dampf zusammen mit auf der Oberfläche befindlichen Verunreinigungen in die Vakuumhaube hinein weggesaugt wird.

30. Schlachtkörperreinigungsanlage nach Anspruch 29, dadurch gekennzeichnet, daß die Dampfhaube (238) die Vakuumhaube (224) umgibt, wobei die Dampfhaube eine Öffnung und eine von einer Lippe (240) begrenzte Kante (240) aufweist, und die Vakuumhaube sich durch die Öffnung hindurch und an der Lippe vorbei erstreckt, so daß die Lippe von der Oberfläche eines Schlachtkörpers weg positioniert ist.

31. Schlachtkörperreinigungsanlage nach Anspruch 29 oder 30, dadurch gekennzeichnet, daß die unebene Kante (240) der Vakuumhaube (224) eine gebogte Kante ist.

32. Schlachtkörperreinigungsanlage nach Anspruch 29 bis 31, dadurch gekennzeichnet, daß die Einrichtung (244, 246) zum Sterilisieren mit einem Heißwassersprühstrahl zum Reinigen der Innenwände (226, 228, 230, 232) der Vakuumhaube (224) von einer Düse (244) in der Vakuumhaube abgegebenes heißes Wasser ist, und des weiteren umfassend Einrichtungen (250, 260) für die Zufuhr von unter Druck stehendem heißem Wasser.

33. Schlachtkörperreinigungsanlage nach Anspruch 29 bis 33, gekennzeichnet durch Einrichtungen (250, 260) für die Zufuhr von unter Druck stehendem heißem Wasser und ein Ventil (252) zwischen den Einrichtungen und der Düse (244), wobei das Ventil über einen von Hand betätigbaren Handgriff (254) an dem Stab (220) gesteuert wird, so daß der Bediener des Stabes je nach Bedarf sterilisierendes Wasser versprühen kann.

34. Schlachtkörperreinigungsanlage nach Anspruch 29 bis 33, dadurch gekennzeichnet, daß die Düse (244) so ausgerichtet ist, daß sie sterilisierendes Wasser gegen die Innenwände (226, 228, 230, 232) der Vakuumhaube (224) und durch die Öffnung in der Vakuumhaube auf die Oberfläche eines dort befindlichen Schlachtkörpers sprüht, um die Oberfläche des dort befindlichen Schlachtkörpers weiter zu reinigen, wobei der Dampf, die Verunreinigungen und das Wasser von der Vakuumhaube im wesentlichen weggesaugt werden.

35. Schlachtkörperreinigungsanlage nach Anspruch 29 bis 34, gekennzeichnet durch ein Wasserrücklaufrohr (256), das mit dem Ventil (252) verbunden ist, wobei das Ventil so konfiguriert ist, daß in seiner Ruhestellung Wasser aus der Quelle (260) für heißes Wasser zu dem Rücklaufrohr fließt, um den Strom durch das Ventil sowohl in der Arbeitsstellung als auch in der Ruhestellung aufrechtzuerhalten.

36. Schlachtkörperreinigungsanlage nach Anspruch 29 bis 35, dadurch gekennzeichnet, daß ein Stromaggregat (218) über biegsame Verbindungselemente (258) mit dem Stab (220) verbunden ist, wobei das Stromaggregat heißes Wasser und Dampf zu dem Stab leitet und ein Vakuum erzeugt, um Wasser, Dampf und Verunreinigungen aus dem Stab abzuziehen.

37. Anlage nach Anspruch 20, gekennzeichnet durch eine Heißwassersprühdüse (78, 80, 82; 244) in der Haube (86; 224), wobei die Wassersprühdüse so positioniert und ausgerichtet ist, daß sie einen Sprühstrahl von heißem Wasser an die Öffnung (68; 226, 228, 230, 232) der Haube und durch die Öffnung abgibt, um ihn auf die Oberfläche des Schlachtkörpers zu richten.

38. Schlachtkörperreinigungsanlage nach Anspruch 37, dadurch gekennzeichnet, daß die Haube (224) eine obere Wand (226) und eine untere Wand (228) besitzt, wobei die obere oder die untere Wand die unebene Wand (226, 228) darstellt, und die Dampfüdse entlang der unebenen Wand ausgerichtet ist.

39. Schlachtkörperreinigungsanlage nach Anspruch 38, dadurch gekennzeichnet, daß die Dampfdüse eine erste Dampfdüse ist, und daß es auch noch eine zweite Dampfdüse gibt, wobei die erste Dampfdüse entlang der oberen Wand (226) der Haube (224) ausgerichtet ist, und die zweite Dampfdüse entlang der unteren Wand (228) der Haube ausgerichtet ist, so daß Dampf aus den Düsen auf der Oberfläche eines Schlachtkörpers im Bereich der Mündung (226, 228, 230, 232) der Haube auftrifft.

40. Schlachtkörperreinigungsanlage nach Anspruch 39, dadurch gekennzeichnet, daß sowohl die obere als auch die untere Wand (226, 228) eine unebene Kante (240) besitzt, so daß Dampf, Wasser und Verunreinigungen auf dieser Oberfläche des Schlachtkörpers im Bereich der oberen und der unteren Wand in die Vakuumhaube (224) gezogen werden.

41. Schlachtkörperreinigungsanlage nach Anspruch 38 bis 40, dadurch gekennzeichnet, daß die unebene Kante (240) eine gekerbte Kante ist.

42. Schlachtkörperreinigungsanlage nach Anspruch 38, dadurch gekennzeichnet, daß sie wenigstens einen mit der Hand greifbaren Handgriff (332, 344) umfaßt, der an dem Stab (220) befestigt ist.

43. Schlachtkörperreinigungsanlage nach Anspruch 42, dadurch gekennzeichnet, daß es einen ersten und einen zweiten mit der Hand greifbaren Handgriff (332, 344) gibt, der an dem Stab (220) befestigt ist.

44. Schlachtkörperreinigungsanlage nach Anspruch 43, dadurch gekennzeichnet, daß wenigstens einer der Handgriffe (332, 344) in bezug auf den Stab (220) verstellbar ist, so daß der Handgriff zur bequemeren Handhabung durch den Benutzer verstellt werden kann.

45. Anlage nach Anspruch 20, gekennzeichnet durch:
eine Wassersprühdüse (244) in der Haube (224), wobei die Wassersprühdüse so positioniert und ausgerichtet ist, daß sie heißes Wasser durch die Öffnung hinaus in die Haube sprüht;
eine Dampfdüse (364), wobei die Dampfdüse an der Haube befestigt ist und so positioniert und ausgerichtet ist, daß sie Dampf im Bereich der Öffnung in die Haube sprüht; und
eine Einrichtung (236) zum Anschluß von Vakuum an die Haube, eine Einrichtung (250) zum Anschluß von unter Druck stehendem heißen Wasser an die Wassersprühdüse, und eine Einrichtung (242) zum Anschluß von unter Druck stehendem Dampf an die Dampfdüse, so daß der Stab (220) so betätigt werden kann, daß er die Haube in die Nähe einer ausgewählten verunreinigten Oberfläche auf einem Schlachtkörper bringt, so daß ein Wassersprühstrahl und ein Dampfsprühstrahl die Verunreinigung loswäscht und einen Abschnitt des Schlachtkörpers im Bereich der Haube sterilisiert, und das Vakuum die Verunreinigung, Wasser und Dampf vom Bereich der Haube abzieht.

46. Schlachtkörperreinigungsanlage nach Anspruch 45, dadurch gekennzeichnet, daß die Haube (224) durch eine obere Wand (226) und eine untere Wand (228) begrenzt ist, und der Dampfsprühstrahl entlang einer von der oberen und der unteren Wand gerichtet ist.

47. Schlachtkörperreinigungsanlage nach Anspruch 46, dadurch gekennzeichnet, daß es zwei Dampfsprühstrahlen (364, 368) gibt, die sich jeweils im Bereich der oberen und der unteren Wand (226, 228) befinden, so daß Dampf im Bereich der oberen und der unteren Wand der Haube (224) versprüht wird.

48. Schlachtkörperreinigungsanlage nach Anspruch 47, dadurch gekennzeichnet, daß sowohl die obere als auch die untere Wand (226, 228) eine Öffnung im Bereich der Mündung (226, 228, 230, 232) der Haube (224) aufweist, so daß Dampf und Verunreinigungen im Bereich der oberen und der unteren Wand in die Haube gezogen werden.

49. Schlachtkörperreinigungsanlage nach Anspruch 45, dadurch gekennzeichnet, daß sich der Dampfsprühstrahl im Bereich einer die Haube (224) begrenzenden Wand (226, 228, 230, 232) befindet, wobei die Wand Öffnungen im Bereich der Mündung (226, 228, 230, 232) der Haube aufweist, damit wenigstens etwas von dem Dampf durch das Vakuum in der Haube in die Haube gezogen werden kann.

50. Schlachtkörperreinigungsanlage nach Anspruch 49, dadurch gekennzeichnet, daß sich wenigstens ein mit der Hand greifbarer Handgriff (332, 344) an dem Stab (220) befindet, um die manuelle Positionierung des Stabes zu unterstützen.

51. Anlage nach Anspruch 20, gekennzeichnet durch:
den Stab (220), der ein mittiges Vakuumrohr (236) und eine Haube (224) auf dem Vakuumrohr umfaßt, wobei die Haube aus einer oberen und einer unteren Wand (226, 228) sowie einer linken und einer rechten Wand (230, 232) besteht, die eine Vakuummündung (226, 228, 230, 232) begrenzen, wobei die Wände im wesentlichen in einer Ebene enden, die Ebene im Winkel in bezug auf das mittige Vakuumrohr verläuft, und wenigstens eine von der oberen und der unteren Wand Öffnungen im Bereich der Mündung aufweist;
eine Heißwassersprühdüse (244), die so positioniert und ausgerichtet ist, daß sie heißes Wasser aus der Mündung sprüht;
eine Dampfdüse (364, 368), die so positioniert und ausgerichtet ist, daß sie Dampf aus der Haube im Bereich der Mündung entlang der Wand mit darin befindlichen Öffnungen sprüht; und
eine Einrichtung zum Anschluß eines biegsamen Vakuumschlauches (258) an das Vakuumrohr, eines biegsamen Heißwasserdruckschlauches (258) an die Wasserdüse, und eines biegsamen Dampfdruckschlauches (258) an die Dampfdüse, so daß dann, wenn die Mündung an die verunreinigte Oberfläche eines zu reinigenden Schlachtkörpers angelegt wird, heißes Wasser auf die Oberfläche des Schlachtkörpers innerhalb der durch die Mündung festgelegten Grenzen gesprüht wird, Dampf im Bereich der Mündung versprüht wird, und Dampf, Wasser und Verunreinigungen über die Haube durch das Vakuumrohr zur Entsorgung weggesaugt werden, so daß Verunreinigungen, Wasser und Dampf von der Oberfläche des zu reinigenden Schlachtkörpers weggeführt werden.

52. Schlachtkörperreinigungsanlage nach Anspruch 51, dadurch gekennzeichnet, daß sowohl die obere als auch die untere Wand (226, 228) der Haube (224) Öffnungen aufweisen, und daß es eine Dampfdüse (364, 368) gibt, die im Bereich der oberen und der unteren Wand positioniert ist, um Dampf im Bereich der oberen und der unteren Wand der Haube abzugeben.

53. Schlachtkörperreinigungsanlage nach Anspruch 51, dadurch gekennzeichnet, daß die Dampfdüse (364, 368) eine erste Dampfdüse ist, und daß die erste Dampfdüse an dem Stab (220) positioniert ist, um Dampf entlang der oberen Wand (226) zu richten, und daß es eine zweite Dampfdüse (364, 368) gibt, wobei die zweite Dampfdüse so positioniert ist, daß sie Dampf entlang der unteren Wand (228) richtet, wobei die Öffnungen Kerben (356, 358) sowohl in der oberen Wand als auch in der unteren Wand im Bereich der Mündung (226, 228, 230, 232) der Haube (224) umfassen.

54. Schlachtkörperreinigungsanlage nach Anspruch 53, dadurch gekennzeichnet, daß es einen Wassertemperaturfühler (380) im Bereich der Heißwasserdüse (244) gibt, so daß der Heißwasserfühler feststellen und anzeigen kann, wenn die Temperatur des an die Heißwasserdüse abgegebenen Wassers unterhalb einer Bezugstemperatur liegt.

55. Schlachtkörperreinigungsanlage nach Anspruch 51, dadurch gekennzeichnet, daß es zwei mit der Hand greifbare Handgriffe (332, 344) auf dem mittigen Rohr (236) gibt, damit sie der Bediener ergreifen kann, um den Stab (220) zu positionieren, wobei wenigstens einer der Handgriffe (332, 344) zur bequemeren Handhabung durch den Bediener verstellt werden kann.

## Revendications

1. Système de nettoyage de carcasse comprenant :
des moyens (34;108;260,264;374,378) pour la fourniture d'un fluide de nettoyage sous pression ;
une source de vide (36;118;268;312);
un dispositif de buse d'aspiration (62;92;224; 314) ;
une tête de nettoyage de carcasse (28;96;220; 314) qui peut être prise manuellement et positionnée manuellement, la tête de nettoyage de carcasse ayant des parois (64,65,66 ,67;98,104;226,228,230,232;316,318, 320,322) qui définissent une bouche d'aspiration (68;102; 328) qu'on peut appliquer contre une surface d'une carcasse au-dessous d'une contamination de cette dernière, la tête de nettoyage de carcasse comportant une buse de fluide de nettoyage (78,80,82;112;238;360,364,368) adjacente à la dite bouche d'aspiration ;
dans lequel :
le dispositif de buse d'aspiration commande l'application du vide à la bouche d'aspiration ;
des moyens (56;110;252;342) sont prévus pour régler le débit de fluide de nettoyage vers ladite buse de fluide ; et
des moyens (48;92;222;332;344) sont prévus pour positionner la bouche d'aspiration près de la contamination sur une carcasse afin d 'enlever la contamination de cette dernière ;
caractérisé en ce que la tête de nettoyage de carcasse est configurée d'une manière telle que les parois définissant la bouche d'aspiration ne sont pas collées sur la surface de la carcasse par l'effet du vide.

2. Système selon la revendication 1, caractérisé en outre en ce qu'il comprend des moyens de fourniture de fluide de nettoyage (34;108;260;264;374,378), le dit fluide de nettoyage étant un fluide de nettoyage à base d'eau à une température d'au moins 72°C (161°F).

3. Système selon la revendication 1 ou 2, caractérisé en ce que ledit fluide de nettoyage contient un fluide antiseptique.

4. Système selon les revendications 1 à 3, caractérisé en ce que ladite tête (28;96;220;314) comprend une vanne à commande manuelle (56;110;252) de sorte que ladite buse d'aspiration (62;92;224;314) est connectée à ladite bouche d'aspiration (68;102;328) par manoeuvre de ladite vanne.

5. Système selon les revendications 1 à 4, caractérisé en ce que ladite tête (28;96;220;314) comporte une vanne (56;110;252) pour régler le débit de fluide de nettoyage vers ladite buse (78,80,82;112;238;360,364, 368) de sorte que la manoeuvre de ladite vanne permet la distribution de fluide de nettoyage à partir de la dite buse.

6. Système selon les revendications 1 à 5, caractérisé en ce que ladite bouche d'aspiration (68; 102;328) est formée en une matière flexible de sorte que ladite bouche d'aspiration peut fléchir pour s'adapter à des surfaces irrégulières.

7. Système selon la revendication 1, caractérisé en ce qu'il comprend :
une source de fluide de nettoyage sous pression (34) ;
des moyens (50) de connexion de la tête de nettoyage de carcasse (28) à la source de fluide de nettoyage sous pression et à la source de vide, incluant des tuyaux flexibles, ladite bouche d'aspiration (68) étant connectée à la source de vide (36) avec interposition d'une vanne de vide (70) ;
la buse de fluide de nettoyage (78,80,82) sur la tête étant placée au-dessus de la bouche d'aspiration, la buse étant connectée à la source de fluide de nettoyage sous pression, une vanne (56) réglant le débit de fluide de nettoyage vers ladite buse, ladite tête pouvant être placée contre la surface d'une carcasse, et ladite vanne de vide étant manoeuvrable pour appliquer un vide à ladite bouche d'aspiration lorsque ladite bouche d'aspiration est contre une carcasse, ladite vanne de fluide de nettoyage étant manoeuvrable, lorsque ladite vanne de vide est actionnée, de sorte que le fluide de nettoyage est appliqué de façon adjacente à la carcasse et que la bouche d'aspiration aspire et évacue le fluide de nettoyage et la contamination adjacente.

8. Système selon la revendication 7, caractérisé en ce que lesdites vannes (56,70) sont reliées l'une à l'autre d'une manière telle qu'on peut ouvrir ladite vanne de fluide de nettoyage seulement lorsque ladite vanne de vide est ouverte.

9. Système selon la reve 7 ou 8, caractérisé en ce que ladite tête (28) comprend un corps (46) et ledit corps contient un passage de vanne (54), une vanne (56) dans ledit passage de vanne, ladite vanne étant traversée à la fois par un orifice de vide (70) et un orifice de fluide de nettoyage (74) de sorte que la manoeuvre de ladite vanne permet la distribution de fluide de nettoyage sous pression à ladite buse (78, 80,82) et permet l'évacuation par aspiration des matières à ladite bouche d'aspiration (68).

10. Système selon la revendication 9, caractérisé en ce que ledit corps (46) est configuré de sorte qu'on peut le saisir à la main, et ladite vanne (56) est placée de sorte qu'on peut la manoeuvrer manuellement avec la même main pendant que ledit corps est saisi et manipulé.

11. Système selon la revendication 10, caractérisé en ce que ladite partie saisissable à la main dudit corps est une poignée (48) et ladite vanne (56) est une vanne à trompette placée près de ladite poignée.

12. Système selon les revendications 7 à 11, caractérisé en ce que ladite bouche d'aspiration (68) est fabriquée en une matière flexible de sorte que la dite bouche d'aspiration peut fléchir pour s'adapter à la configuration extérieure contre laquelle elle est placée.

13. Système selon les revendications 7 à 12, caractérisé en ce qu'un capuchon (86) est placé sur la dite buse (78,80,82) de sorte que le fluide de nettoyage sortant de ladite buse est limité à une position contre ladite carcasse et adjacente à ladite bouche d'aspiration (68).

14. Système selon les revendications 7 à 13, caractérisé en ce que ladite source de fluide de nettoyage (34) comprend une source de fluide de nettoyage à base d'eau à une température d'au moins 72°C (161°F).

15. Système selon les revendications 7 à 14, caractérisé en ce que ledit fluide de nettoyage contient un fluide antiseptique.

16. Procédé de nettoyage de contaminants de la surface d'une carcasse, comprenant les étapes de :
application d'une buse d'aspiration (62;92; 224;314) à l'extérieur d'une carcasse ;
projection d'un brouillard/jet pulvérisé de fluide de nettoyage à la carcasse, directement au-dessus de la buse d'aspiration ; et
déplacement de la buse d'aspiration vers le haut pour aspirer la contamination et le fluide de nettoyage de la surface de la carcasse ;
caractérisé en ce qu'on prévoit des moyens tels que la buse d'aspiration ne colle pas a la surface de la carcasse sous l'effet du vide.

17. Procédé selon la revendication 16, incluant l'étape de réglage du débit de fluide de nettoyage et du vide de sorte que le fluide de nettoyage est distribué seulement lorsque le vide est appliqué à la buse d'aspiration (62;92;224;314).

18. Procédé selon la revendication 16 ou 17, comprenant en outre l'installation d'un capuchon (86) pour limiter la dispersion du fluide de nettoyage à une position directement au-dessus de la buse d'aspiration.

19. Procédé selon les revendications 16 à 18, comprenant en outre la commande manuelle du mouvement de positionnement et de montée de la buse d'aspiration (62; 92;224;314) et la commande manuelle de la fourniture simultanée du fluide de nettoyage et du vida.

20. Système de nettoyage de carcasse comprenant :
une perche de nettoyage de carcasse (220) qui peut être manoeuvrée manuellement à la surface de la carcasse à nettoyer ;
une trompe d'aspiration (62;224) sur ladite perche, ladite trompe d'aspiration étant définie par des parois (64,65,66,67;226,228,230,232) ;
des moyens (36;268) connectés à ladite trompe d'aspiration pour appliquer un vide à ladite trompe afin d'aspirer les matières qui se trouvent entre les dites parois de ladite trompe vers ladite source de vide ;
caractérisé en ce que :
une trompe de fluide (86;238) est prévue à côté de ladite trompe d'aspiration pour distribuer un fluide autour de ladite pompe d'aspiration ;
des moyens (34;260,264) sont connectés à ladite trompe de fluide pour fournir un fluide à ladite trompe de fluide ; et
des moyens (244,246) sont prévus pour stériliser ladite trompe d'aspiration de sorte que cette dernière ne porte pas de contamination ; et
il est en outre caractérisé en ce qu'au moins certaines desdites parois sont configurées de sorte que ladite trompe d'aspiration ne se colle pas sur une surface sous l'effet du vide.

21. Système selon la revendication 20, caractérisé en ce que lesdits moyens (244,246) pour la stérilisation comprennent une buse de projection d'eau chaude configurée et placée de manière à pulvériser de l'eau sur l'intérieur desdites parois (64,65,66,67;226, 228,230,232) de ladite trompe d'aspiration (62;224).

22. Système selon la revendication 20 ou 21, caractérisé en ce que ladite buse de pulvérisation (244) est dirigée de sorte qu'au moins une partie de l'eau ainsi pulvérisée est projetée hors de l'orifice de la dite trompe d'aspiration (224) de manière à frapper une carcasse contre laquelle ladite trompe d'aspiration est appliquée, afin d'aider au nettoyage de la carcasse.

23. Système selon les revendications 20 à 22, caractérisé en ce qu'il comprend une source (260) d'eau chaude sous pression et une vanne (56;252) sur ladite perche, ladite source d'eau chaude sous pression étant connectée à ladite vanne et ladite vanne étant connectée à ladite buse (244) de sorte que la manoeuvre de ladite vanne entraîne une projection d'eau chaude par ladite buse.

24. Système selon la revendication 23, caractérisé en ce que ladite vanne (252) comporte une poignée manoeuvrable à la main (254) placée sur ladite perche (220) de sorte que l'opérateur peut déplacer ladite perche et actionner ladite poignée pour pulvériser de l'eau, comme désiré.

25. Système selon les revendications 20 à 24, caractérisé en ce que ladite trompe d'aspiration (224) présente un bord irrégulier (240) afin d'empêcher un collage.

26. Système selon les revendications 20 à 25, caractérisé en ce que ladite trompe de fluide (238) est une trompe de vapeur qui entoure ladite trompe d'aspiration (224) et qui comporte une lèvre (240) définissant le bord avant de ladite trompe de vapeur, ladite trompe d'aspiration s'étendant à travers ladite trompe de vapeur et au-delà de ladite lèvre.

27. Système selon la revendication 24, caractérisé en ce que ladite vanne (252) comporte un tube de recyclage en retour (256) connecté à la vanne, et ladite vanne est configurée intérieurement de sorte que, dans la position inactive, l'eau chaude traverse ladite vanne vers ledit tube de retour d'une manière telle que l'eau chaude circule à travers ladite vanne.

28. Système selon la revendication 25, caractérisé en ce que lesdites parois (226,228,230,232) définissent une ouverture trapézoïdale de ladite trompe d'aspiration (224).

29. Système selon la revendication 20, caractérisé en ce que les parois (226,228,230, 232) de la trompe d'aspiration (224) définissent une ouverture et les dites parois se terminent par un bord irrégulier (240) de sorte que la trompe d'aspiration ne se colle pas sur une surface sous l'effet du vide, et des moyens (236) connectent le vide à ladite trompe d'aspiration pour créer une aspiration à ladite ouverture de ladite trompe d'aspiration ; et
la trompe de fluide à vapeur (238) est une trompe de vapeur montée de manière à distribuer de la vapeur à l'endroit de la trompe d'aspiration, de sorte que la vapeur est aspirée et évacuée, en même temps que les contaminants de la surface, dans ladite trompe d'aspiration.

30. Système de nettoyage de carcasse selon la revendication 29, caractérisé en ce que ladite trompe de vapeur (238) entoure ladite trompe d'aspiration (224), ladite trompe de vapeur présentant une ouverture et un bord (240) défini par une lèvre (240), ladite trompe d'aspiration s'étendant à travers ladite ouverture et au-delà de ladite lèvre de sorte que ladite lèvre est espacée d'une surface de la carcasse.

31. Système de nettoyage de carcasse selon la revendication 29 ou 30, caractérisé en ce que ledit bord irrégulier (240) de ladite trompe d'aspiration (224) est un bord dentelé.

32. Système de nettoyage de carcasse selon les revendications 29 à 31, caractérisé en ce que les dits moyens (244,246) de stérilisation par jet d'eau chaude pour nettoyage des parois intérieures (226,228,230, 232) de ladite trompe d'aspiration (224) sont de l'eau chaude distribuée par une buse (244) à l'intérieur de ladite trompe d'aspiration, et ils comprennent en outre des moyens (250,260) de fourniture d'eau chaude sous pression.

33. Système de nettoyage de carcasse selon les revendications 29 à 33, caractérisé en ce qu'il comprend des moyens (250,260) de fourniture d'eau chaude sous pression et une vanne (252) placée entre ces moyens et ladite buse (244), ladite vanne étant commandée par une poignée actionnable manuellement (254) placée sur ladite perche (220) de sorte que l'opérateur de ladite perche peut pulvériser l'eau de stérilisation comme nécessaire.

34. Système de nettoyage de carcasse selon les revendications 29 à 33, caractérisé en ce que la dite buse (244) est dirigée de manière à projeter l'eau de stérilisation contre les parois intérieures (226,228, 230,232) de ladite trompe d'aspiration (224) et à travers l'ouverture de ladite trompe d'aspiration en impact sur une surface de carcasse adjacente afin de nettoyer encore la surface de carcasse adjacente, la vapeur, les contaminants et l'eau étant substantiellement aspirés et évacués par ladite trompe d'aspiration.

35. Système de nettoyage de carcasse selon les revendications 29 à 34, caractérisé par un tube de retour d'eau (256) connecté à ladite vanne (252), ladite vanne étant configurée de sorte que, lorsqu'elle est dans une position inactive, l'eau circule de ladite source (260) d'eau chaude audit tube de retour afin de maintenir une circulation à travers ladite vanne à la fois dans la position active et la position inactive.

36. Système de nettoyage de carcasse selon les revendications 29 à 35, caractérisé en ce qu'un groupe d'alimentation (218) est connecté à ladite perche (220) par des connecteurs flexibles (258), ledit groupe d'alimentation fournissant l'eau chaude et la vapeur à ladite perche et fournissant le vide pour aspirer l'eau, la vapeur et les contaminants à partir de ladite perche.

37. Système selon la revendication 20, caractérisé en ce qu'il comprend une buse de pulvérisation d'eau chaude (78,80,82;244) à l'intérieur de la trompe (86;224), ladite buse de pulvérisation d'eau étant placée et dirigée de sorte qu'elle envoie un jet d'eau chaude à ladite bouche (68;226,228,230,232) de ladite trompe et à travers ladite bouche pour application sur une surface de carcasse.

38. Système de nettoyage de carcasse selon la revendication 37, caractérisé en ce que ladite trompe (224) comporte une paroi supérieure (226) et une paroi inférieure (228), une desdites parois supérieure et inférieure étant ladite paroi irrégulière (226,228), et la buse de vapeur est dirigée le long de ladite paroi irrégulière.

39. Système de nettoyage de carcasse selon la revendication 38, caractérisé en ce que ladite buse de vapeur est une première buse de vapeur et il est également prévu une deuxième buse de vapeur, ladite première buse de vapeur étant dirigée le long de ladite paroi supérieure (226) de ladite trompe (224) et ladite deuxième buse de vapeur étant dirigée le long de ladite paroi inférieure (228) de ladite trompe de sorte que la vapeur sortant desdites buses frappe une surface de carcasse adjacente à ladite bouche (226, 228,230,232) de ladite trompe.

40. Système de nettoyage de carcasse selon la revendication 39, caractérisé en ce que lesdites parois supérieure et inférieure (226,228) ont toutes deux des bords irréguliers (240), de sorte que la vapeur, l'eau et les contaminants sur la surface de carcasse adjacente auxdites parois supérieure et inférieure sont aspirés dans ladite trompe d'aspiration (224).

41. Système de nettoyage de carcasse selon les revendications 38 à 40, caractérisé en ce que ledit bord irrégulier (240) est un bord à encoches.

42. Système de nettoyage de carcasse selon la revendication 38, caractérisé en ce qu'il comprend au moins une poignée de prise manuelle (332,344) fixée à ladite perche (220).

43. Système de nettoyage de carcasse selon la revendication 42, caractérisé en ce qu'il y a une première et une deuxième poignées de prise manuelle (332, 344) fixées à ladite perche (220).

44. Système de nettoyage de carcasse selon la revendication 43, caractérisé en ce qu'au moins une desdites poignées (332,344) est réglable par rapport à la dite perche (220), de sorte qu'on peut régler ladite poignée pour le confort de l'utilisateur.

45. Système selon la revendication 20, caractérisé en ce que :
une buse de pulvérisation d'eau (244) est prévue dans ladite trompe (224), ladite buse de pulvérisation d'eau étant placée et dirigée de manière à projeter de l'eau chaude à l'extérieur à travers ladite ouverture de ladite trompe ;
il est prévu une buse de vapeur (364), ladite buse de vapeur étant fixée à ladite trompe et étant placée et dirigée de manière à projeter de la vapeur près de la dite ouverture de ladite trompe ; et
il est prévu des moyens (236) de connexion du vide à ladite trompe, des moyens (250) de connexion d'eau chaude sous pression à ladite buse de pulvérisation d'eau et des moyens (242) de connexion de la vapeur sous pression à ladite buse de vapeur, de sorte qu'on peut manipuler ladite perche (220) pour amener ladite trompe près d'une surface contaminée choisie sur une carcasse afin de détacher par lavage la contamination au moyen du jet d'eau et du jet de vapeur et de stériliser une partie de la carcasse adjacente à ladite trompe, et d'évacuer par aspiration la contamination, l'eau et la vapeur de la zone adjacente à ladite trompe.

46. Système de nettoyage de carcasse selon la revendication 45, caractérisé en ce que ladite trompe (224) est définie par des parois supérieure (226) et inférieure (228) et ledit jet de vapeur est dirigé le long d'une desdites parois supérieure et inférieure.

47. Système de nettoyage de carcasse selon la revendication 46, caractérisé en ce qu'il est prévu deux jets de vapeur (364,368), un jet étant adjacent à chacune desdites parois supérieure et inférieure (226, 228), de sorte que la vapeur est projetée de façon adjacente auxdites deux parois supérieure et inférieure de la dite trompe (224).

48. Système de nettoyage de carcasse selon la revendication 47, caractérisé en ce que lesdites parois supérieure et inférieure (226,228) comportent toutes deux des orifices adjacents à ladite bouche (226,228,230, 232) de ladite trompe (224) de sorte que la vapeur et les contaminants sont aspirés dans ladite trompe de façon adjacente auxdites parois supérieure et inférieure.

49. Système de nettoyage de carcasse selon la revendication 45, caractérisé en ce que ledit jet de vapeur est adjacent à une paroi (226,228,230,232) définissant ladite trompe (224), ladite paroi ayant des trous adjacents à ladite bouche (226,228,230,232) de la dite trompe pour permettre l'aspiration d'au moins une partie de ladite vapeur vers l'intérieur de ladite trompe par le vide qui règne dans ladite trompe.

50. Système de nettoyage de carcasse selon la revendication 49, caractérisé en ce qu'il y a au moins une poignée de prise manuelle (332,344) sur ladite perche (220) pour faciliter le positionnement manuel de ladite perche.

51. Système selon la revendication 20, caractérisé en ce que :
la perche (220) comprend un tube de vide central (236) et une trompe (224) sur ledit tube de vide, ladite trompe étant définie par des parois supérieure et inférieure (226,228) et par des parois gauche et droite (230,232) de manière à définir une bouche d'aspiration (226,228,230, 232), lesdites parois se terminant sensiblement dans un plan, ledit plan étant incliné par rapport audit tube de vide central, au moins une desdites parois supérieure et inférieure comportant des trous adjacents à ladite bouche ;
une buse de pulvérisation d'eau chaude (244) est placée et dirigée de manière à projeter de l'eau chaude au dehors de la dite bouche ;
une buse de vapeur (364,368) est placée et dirigée de manière à projeter de la vapeur au dehors de la dite trompe, près de ladite bouche, le long de ladite paroi comportant des trous ; et
il est prévu des moyens de connexion d'un tuyau flexible de vide (258) audit tube de vide, d'un tuyau flexible d'eau chaude sous pression (258) à ladite buse d'eau et d'un tuyau flexible de vapeur sous pression (258) à ladite buse de vapeur de sorte que, lorsqu'on applique ladite bouche à la surface contaminée d'une carcasse à nettoyer, l'eau chaude est projetée sur la surface de la carcasse à l'intérieur des limites définies par ladite bouche, la vapeur est projetée près de ladite bouche, et la vapeur, l'eau et la contamination sont aspirées et évacuées par ladite trompe, par l'intermédiaire dudit tube de vide, pour rejet afin d'évacuer la contamination, l'eau et la vapeur de la surface de la carcasse à nettoyer.

52. Système de nettoyage de carcasse selon la revendication 51, caractérisé en ce que lesdites parois supérieure et inférieure (226,228) de ladite trompe (224) comportent toutes deux des trous, et une buse de vapeur (364,368) est placée de façon adjacente à la fois auxdites parois supérieure et inférieure afin de distribuer de la vapeur à la fois près desdites parois supérieure et inférieure de ladite trompe.

53. Système de nettoyage de carcasse selon la revendication 51, caractérisé en ce que ladite buse de vapeur (364,368) est une première buse de vapeur et la dite première buse de vapeur est placée sur ladite perche (220) de façon à diriger la vapeur le long de ladite paroi supérieure (226), et il y a une deuxième buse de vapeur (364,368), ladite deuxième buse de vapeur étant placée de façon à diriger la vapeur le long de ladite paroi inférieure (228), lesdits trous comprenant des encoches (356,358) ménagées à la fois dans ladite paroi supérieure et ladite paroi inférieure près de ladite bouche (226,228,230,232) de ladite trompe (224).

54. Système de nettoyage de carcasse selon la revendication 53, caractérisé en ce qu'un capteur de température d'eau (280) est placé près de ladite buse d'eau chaude (244) de sorte que ledit capteur de température d'eau chaude peut détecter et signaler la diminution de la température de l'eau fournie à ladite buse d'eau chaude au-dessous d'une température de référence.

55. Système de nettoyage de carcasse selon la revendication 51, caractérisé en ce qu'il comprend deux poignées de prise manuelle (332,344) sur ledit tube central (236) pour prise par l'opérateur afin de positionner ladite perche (220), au moins une desdites poignées (332,344) étant réglable pour le confort de l'opérateur.
